# FASCICULE DE BREVET EUROPEEN

(11) **EP 0 991 598 B1**
(45) Date de publication et mention de la délivrance du brevet: **14.11.2001**
(21) Numéro de dépôt: 98932220.1
(22) Date de dépôt: 18.06.1998
(51) Int. Cl.: C03B 5/00, C03B 5/02, C03B 3/00, C03B 13/04, C03B 5/04, F23G 5/08, B09B 3/00, F27B 3/18, F27D 3/00

(54) **PROCEDE POUR LA VITRIFICATION D'UN MATERIAU PULVERULENT ET DISPOSITIF POUR LA MISE EN OEUVRE DE CE PROCEDE**
VERFAHREN ZUM VERGLASEN VON PULVERMATERIALIEN UND VORRICHTUNG ZUR ANWENDUNG DIESES VERFAHRENS
METHOD FOR THE VITRIFICATION OF A POWDER SUBSTANCE AND DEVICE THEREFOR

(30) Priorité: 20.06.1997 FR 9707720
(43) Date de publication de la demande: 12.04.2000
(73) Titulaire: AEROSPATIALE MATRA, 75016 Paris (FR); Europlasma, 33160 Saint Médard en Jalles (FR); Societé Anonyme d'Economie Mixte Communautaire de Gestion, 33000 Bordeaux (FR)
(72) Inventeur: LABROT, Maxime, F-33200 Bordeaux (FR); BEUDIN, Vincent, F-33200 Bordeaux (FR); GUIHARD, Bruno, F-33700 Mérignac (FR); PINEAU, Didier, F-33110 Le Bouscat (FR)
(74) Mandataire: Des Termes, Monique
(86) Numéro de dépôt international: FR9801268
(87) Numéro de publication internationale: WO9858882

(56) Documents cités:
- EP-A- 0 670 188
- WO-A-90/02711
- WO-A-94/04631
- WO-A-97/18415
- US-A- 1 761 229
- US-A- 1 999 762
- US-A- 5 319 176

## Description

La présente invention a été réalisée par la Société EUROPLASMA grâce au financement de la Communauté Urbaine de BORDEAUX (FRANCE) par le biais de la Société SOCOGEST (FRANCE), et à la participation et à l'apport technique de la Société AEROSPATIALE (FRANCE).

### Domaine technique

La présente invention se rapporte à un procédé de vitrification en continu d'un matériau pulvérulent et un dispositif pour la mise en oeuvre de ce procédé.

Le procédé de l'invention est destiné à rendre inerte par vitrification tout type de déchets ou résidus solides, en particulier des matériaux pulvérulents ou particulaires contenant par exemple des métaux, en particulier des métaux lourds tels que le mercure, le cadmium, le plomb, etc... et leurs sels, de l'amiante, et d'une manière générale à rendre inerte par vitrification tout produit pulvérulent ou particulaire contenant des métaux lourds ou autres substances toxiques qu'il est nécessaire de détruire, de transformer, ou de piéger en vue d'une valorisation et/ou d'un stockage conforme à la législation actuelle, et en projet, concernant le traitement et l'élimination de ces déchets toxiques.

Ces matériaux pulvérulents peuvent par exemple provenir de l'incinération d'ordures ménagères, de déchets industriels ou hospitaliers. Aussi, l'invention sera décrite ci-après dans son application à rendre inerte des résidus solides provenant de l'incinération d'ordures ménagères, en particulier des résidus constitués par des cendres sous chaudières, des cendres dites "volantes", et des gâteaux de filtration provenant de la neutralisation et du traitement des fumées d'incinération de ces ordures.

Le procédé et le dispositif de la présente invention ont en outre l'avantage de pouvoir s'intégrer, sous forme de "KIT", à un centre d'incinération classique préexistant comprenant de préférence un système de traitement des fumées et gaz d'incinération des déchets. L'ensemble centre d'incinération et "KIT" comprenant le procédé et le dispositif de l'invention conduit alors à un concept d'une usine d'incinération "zéro déchets".

L'incinération des ordures ménagères produit deux catégories d'effluents, d'une part les effluents solides et d'autre part les effluents gazeux ou fumées d'incinération.

Les effluents solides constituent la fraction minérale des déchets, et sont à caractère basique du fait de la présence de certains oxydes métalliques tels que des oxydes de métaux alcalins, et alcalino-terreux. Ces effluents solides sont les cendres dites "sous chaudières" et des mâchefers. Certains mâchefers sont considérés comme non toxiques au regard de la législation en vigueur, et peuvent être utilisés sans danger, par exemple dans des bitumes, après déferraillage. Les cendres sous chaudières quant à elles sont des matériaux pulvérulents très toxiques car elles contiennent des métaux lourds et leurs sels et doivent être stockées avec précaution, après avoir été stabilisés, dans des sites protégés en attente d'un retraitement éventuel.

Les effluents gazeux sont à caractère plus ou moins acide du fait de la présence de gaz acides tels que HCl et HF et d'anhydrides d'acides gazeux tels que SO₂ et CO₂, et ils comprennent des composés toxiques tels que des métaux lourds et leurs sels, et des résidus solides de l'incinération appelés aussi cendres volantes. Ces effluents gazeux ou fumées doivent être filtrés et traités pour neutraliser leur acidité, condenser les métaux et leurs sels et retenir les cendres volantes avant d'être libérés dans l'atmosphère. La neutralisation par voie humide de ces effluents conduisent à la formation d'un matériau pulvérulent ou particulaire plus ou moins aggloméré appelé "gâteau de filtration".

L'ensemble cendres volantes et gâteau de filtration constitue les résidus d'épuration des fumées d'incinération d'ordures ménagères nommées encore REFIOM.

Les REFIOM et les cendres sous chaudières précédemment décrites constituent des matériaux considérés actuellement comme des "déchets ultimes". Ils comprennent des éléments vitrifiables tels que la silice et l'alumine, des sels métalliques volatils à haute température et des substances toxiques telles que les métaux lourds cités précédemment et leurs sels.

Les sels métalliques de ces déchets, les métaux lourds et leurs sels sont solubles dans l'eau et peuvent être facilement entraînés par des eaux de pluie et être dispersés dans les sols et les nappes phréatiques. Il en est de même pour d'autres substances toxiques plus ou moins stables dans le temps et plus ou moins solubles, pouvant être entraînées par les eaux de pluie.

Ces substances peuvent donc constituer une source importante de pollution notamment par lixiviation. La nature et la composition de ces matériaux justifie donc leur classification en déchets industriels spéciaux (DIS) solides minéraux vitrifiables impliquant au regard de la législation de les stabiliser avant ou de les stocker dans des centres de stockage de déchets spéciaux.

La vitrification paraît le moyen le plus sûr actuellement pour rendre inerte ces matériaux ou déchets ultimes d'incinération, en vue de leur stockage voire de leur valorisation.

En effet, ces matériaux contenant de la silice et de l'alumine se liquéfient et forment un bain de fusion lorsqu'on les soumet à des températures supérieures à 1300°C. Ce bain de fusion lorsqu'il est refroidi, forme un matériau cristallin ou un verre amorphe solide véritable matrice de rétention des métaux lourds.

### Art antérieur

Différents procédés et techniques ont déjà été mis au point pour la vitrification de tels matériaux pulvérulents. Ces techniques ont principalement été développées en fonction des moyens de chauffage.

Ainsi la vitrification des matériaux pulvérulents est généralement basée sur l'utilisation de sources d'énergie électrique par effet Joule et par arc électrique, et sur l'utilisation de sources d'énergie fossile par brûleur à gaz ou à fioul.

Par exemple, le document WO-A-92/15532 décrit un dispositif de traitement par vitrification de cendres volantes de déchets chimiques et autres matériaux. Les moyens de chauffage décrits dans ce document sont des électrodes ou un brûleur à gaz. Les électrodes permettent un passage direct d'un courant électrique dans les cendres et déchets chimiques, entraînant la fusion de ces matériaux par effet Joule. Le brûleur à gaz permet une fusion des cendres par convection.

Ce chauffage par effet Joule présente cependant un grand nombre d'inconvénients. En effet, il conduit à un processus de fusion non contrôlable, la répartition de l'énergie au sein des matériaux à vitrifier étant dépendante de la composition chimique variable de ces matériaux, et les températures atteintes sont souvent insuffisantes pour obtenir un bain de fusion homogène. De plus, ce type de chauffage conduit à la formation d'un laitier non vitrifiable qui entraîne des problèmes technologiques au niveau de la conception du four, et altère la qualité du produit fondu vitrifiable. Il est donc souvent nécessaire lorsqu'on utilise un tel chauffage, d'ajouter des additifs pour pallier les inconvénients précédemment cités, mais ces additifs ont malheureusement tendance à dégrader le bilan thermique de la fusion et à augmenter le coût du traitement de vitrification.

En outre, certains dispositifs utilisant l'effet Joule nécessitent des moyens annexes de démarrage du four lorsque les matériaux à vitrifier sont non conducteurs électriques à froid.

Le document WO-A-95/17981 décrit un dispositif de traitement de cendres volantes par vitrification par arc électrique. Dans ce dispositif, les cendres sont introduites dans un four par un conduit constituant une électrode, et progressent depuis l'extrémité libre ouverte de cette électrode, par gravité, vers le fond du four en passant par un arc électrique créé entre l'extrémité libre de l'électrode et le fond du four. Les cendres sont ainsi rapidement chauffées et mises en fusion. L'arc électrique permet la fusion par effet Joule, rayonnement et convection combinés, résultant du développement de l'arc dont le parcours est partiellement dans les cendres et partiellement en dehors des cendres.

Le chauffage par arc électrique présente lui aussi un certain nombre d'inconvénients tels qu'un contrôle difficile du processus très inhomogène de fusion, des problèmes technologiques pour la conception du four liés au rayonnement de l'arc, et une production de fumées très toxiques résultant de la formation de composés carbone/oxygène/chlore.

Les fours utilisant l'énergie fossile quant à eux présentent l'inconvénient de nécessiter des débits de gaz de combustion élevés, de présenter un transfert thermique souvent peu efficace, et de produire des fumées toxiques résultant de la formation de composés carbone/oxygène/chlore.

L'utilisation des sources d'énergie précédemment décrites présente non seulement l'inconvénient d'une consommation énergétique élevée, conduisant à de mauvais bilans thermiques de vitrification, pour l'obtention des hautes températures requises pour la vitrification, mais aussi d'entraîner une émission importante d'effluents gazeux toxiques à traiter pour certains d'entre eux. D'autre part, le matériau vitrifié obtenu n'est pas homogène et il présente de nombreux défauts de structure, et comprend des amas de particules et de matériaux pulvérulents non fondus qui rendent le verre obtenu fragile et dégradant sensiblement les propriétés de résistance à la lixiviation.

Plus récemment, des procédés de chauffage par plasma d'arc ont été développés pour la vitrification des matériaux pulvérulents. Les procédés à plasma d'arc permettent de mieux contrôler l'énergie fournie dans la zone de fusion notamment en choisissant une composition de gaz dans la torche qui permette d'obtenir des conditions thermochimiques adéquates.

La torche à plasma présente de plus l'avantage, par sa souplesse d'adaptation et d'utilisation, de diminuer la quantité de gaz toxiques formés par réactions thermochimiques lors du processus de vitrification.

La demande FR-A-2 708 217 décrit un procédé pour rendre inerte des déchets pulvérulents par torche à plasma et une installation pour la mise en oeuvre de ce procédé.

Le procédé décrit dans ce document consiste à introduire dans un four des résidus pulvérulents issus de l'incinération d'ordures ménagères et du traitement des fumées d'incinération de ces ordures, à faire fondre ces résidus à l'aide d'une torche à plasma, et à évacuer les cendres fondues du four par gravité.

Ce procédé se caractérise en ce qu'il consiste à faire fonctionner la torche de manière à maintenir le plasma d'arc entre le bain de fusion des résidus dans le four et la torche et à maintenir la torche, dans une zone de réaction entre le plasma et les produits crus à traiter, en permanence submergée par la masse des produits crus. Les résidus crus à traiter s'écoulent par gravité dans le four, la partie inférieure de la torche est en permanence immergée dans lesdits résidus et les produits fondus s'écoulent par gravité par le fond du four.

Le procédé décrit dans ce document conduit à un processus de fusion, qui, dans le cas du traitement de cendres d'incinération, nécessite une déchloruration préalable des cendres pour éviter la formation de croûtes de sels dans le four, ces sels étant préjudiciables à un fonctionnement en continu de longue durée du four.

Le document WO-A1-97/18415 se rapporte à un équipement pour la décomposition, la fusion et la vitrification de déchets. L'équipement comporte un four avec des sources de chaleur sous forme de torches plasma agissant de façon perpendiculaire sur les déchets de façon à les faire fondre. Le brassage et l'homogénéisation des matières fondues sont obtenus par injection de gaz qui a pour effet de conférer un mouvement tournant à la masse fondue et la sortie de la matrice est effectuée au point le plus bas du four.

### Exposé de l'invention

La présente invention a précisément pour but de fournir un procédé et un dispositif pour la mise en oeuvre de ce procédé, destinés à rendre inerte par vitrification un matériau pulvérulent comprenant des composés toxiques, notamment des métaux lourds et leurs sels.

Le procédé et le dispositif de l'invention permettent notamment un contrôle efficace du processus de fusion d'un matériau pulvérulent et l'obtention d'un verre amorphe, ou d'un matériau cristallisé, qui remplit toutes les normes s'appliquant à l'entreposage des déchets industriels spéciaux voire à leur valorisation par exemple comme matériau de construction.

Le procédé de l'invention est un procédé de vitrification en continu d'un matériau pulvérulent dans lequel le matériau pulvérulent est introduit dans une zone de fusion d'un four, par un moyen d'injection, pour y être mis en fusion au moyen d'au moins une torche à plasma de façon à obtenir un bain de fusion, et dans lequel le bain de fusion est extrait du four dans une zone de coulée, le matériau étant introduit latéralement dans la zone de fusion selon une direction comprenant une composante horizontale, et le bain de fusion étant extrait du four par débordement dans ladite zone de coulée, sensiblement selon ladite composante horizontale et à l'opposé du moyen d'injection du matériau dans le four, par rapport à la zone de fusion.

Le terme "injection" a été utilisé dans la présente description et dans les revendications en annexe par commodité. Il est aisément compris à la lecture des différents moyens d'injection du matériau pulvérulent utilisables selon le procédé de l'invention que ce terme n'est pas limité à une introduction du matériau pulvérulent avec pression dans la zone de fusion, mais peut inclure également, de manière évidente, une introduction sans pression du matériau pulvérulent dans la zone de fusion.

De préférence, le bain de fusion est extrait du four par débordement et tirage dans ladite zone de coulée, d'un verre amorphe ou d'un matériau cristallisé obtenu par refroidissement dudit bain de fusion.

Le matériau pulvérulent peut être tout type de déchets ou résidus solides, en particulier des matériaux pulvérulents ou particulaires contenant des substances toxiques, par exemple des métaux, par exemples des métaux lourds tels que le mercure, le cadmium, le plomb, etc..., et leurs sels, et d'une manière générale tout produit pulvérulent ou particulaire contenant des métaux ou autres substances toxiques qu'il est nécessaire de rendre inerte par vitrification, pour un stockage ou pour envisager une valorisation.

Le matériau pulvérulent est composé de particules dont la granulométrie peut être très étendue et de l'ordre de 1 µm à quelques millimètres, par exemple jusqu'à 5 mm environ.

Le matériau pulvérulent est injecté latéralement dans la zone de fusion d'un four, selon une direction comprenant une composante horizontale, ladite direction pouvant comprendre en outre une composante verticale orientée vers le bas, c'est-à-dire vers le bain de fusion.

Selon le procédé de l'invention, les composantes horizontale et verticale d'injection du matériau pulvérulent dans le four peuvent être réglables, et l'injection du matériau pulvérulent peut être effectuée sur le bain de fusion ou dans le bain de fusion. Un tel procédé facilite le transfert thermique initial, c'est-à-dire dès l'injection du matériau pulvérulent dans le four, dans ou sur le bain de fusion, entre le bain de fusion et le matériau pulvérulent et évite les envols de matériaux pulvérulents hors du bain de fusion, c'est-à-dire, par exemple, vers des dispositifs d'évacuation et/ou de traitement des fumées et gaz de mise en fusion du matériau pulvérulent, et vers des réfractaires du four non immergés par le bain de fusion. Le procédé de l'invention permet donc une mise en fusion du matériau pulvérulent au fur et à mesure de son injection dans la zone de fusion, sans qu'il y ait une accumulation trop importante de matériau pulvérulent non fondu dans ladite zone de fusion.

Lorsque l'injection du matériau est réalisée sur le bain de fusion, c'est-à-dire à la surface de celui-ci, elle est réalisée de manière à éviter des projections de matériau pulvérulent et/ou de bain de fusion vers la zone de fusion non immergée par le bain de fusion.

De préférence, l'injection du matériau pulvérulent dans le four est réalisé avec un angle d'environ 0 à 90°, par rapport à la surface du bain de fusion, de préférence de 10 à 45° par rapport à la surface du bain de fusion, et de préférence dans le bain de fusion.

Selon le procédé de l'invention, l'injection peut être réalisée par exemple au moyen d'un injecteur à vis, d'un injecteur à poussoir, ou d'un injecteur pneumatique, et de préférence au moyen d'un injecteur pneumatique.

Lorsque l'injection est réalisée au moyen d'un injecteur pneumatique, l'injection du matériau pulvérulent peut être réalisée en phase diluée ou en phase dense. Ces phases diluées et denses de transport ou d'injection d'un matériau pulvérulent se définissent et se différencient par la fraction massique de solides dans le gaz de transport utilisé. Généralement, une phase diluée correspond à un transport, ou à une injection, de 0,01 à 15 kg de solide par kilogramme de gaz de transport, et une phase dense correspond à un transport ou à une injection de 15 à 200 kg de solide par kilogramme de gaz de transport.

Selon l'invention, lorsque l'injection est réalisée au moyen d'un injecteur pneumatique, l'injection du matériau pulvérulent dans la zone de fusion peut être réglable par réglage de la fraction massique du matériau pulvérulent dans le gaz de transport et peut être réalisée avec une fraction massique de matériau pulvérulent de 5 à 50 kg par kilogramme de gaz de transport, de préférence de 15 à 30 kg de matériau pulvérulent par kilogramme de gaz de transport correspondant à une injection pneumatique en phase dense.

Une injection pneumatique en phase dense selon un mode de réalisation préféré du procédé de l'invention conduit à une injection du matériau pulvérulent quasi-continue, discontinue, ondulatoire ou pulsatoire ou en régime piston suivant le débit d'injection. Ce type d'injection peut permettre de limiter l'envol du matériau pulvérulent par exemple vers des dispositifs de traitement des gaz et fumées, et permet d'optimiser le bilan thermique de fusion du matériau pulvérulent en limitant des débits de gaz de transport trop importants et en évitant la dispersion du matériau hors du bain de fusion.

Selon le procédé de l'invention, l'injection du matériau pulvérulent dans la zone de fusion du four peut être réglé par réglage du débit d'injection du matériau pulvérulent. Ce réglage est variable et peut être fonction notamment du volume de bain de fusion dans la zone de fusion du four, du niveau du bain de fusion dans la zone de fusion et dans la zone de coulée, de la puissance de la torche, de l'écoulement et du tirage du bain de fusion hors du four, et de la nature du matériau pulvérulent.

Le réglage de l'injection du matériau pulvérulent par réglage des composantes verticale et horizontale d'injection du matériau pulvérulent et/ou par réglage d'une injection sur ou dans le bain de fusion et/ou par réglage de la fraction massique de matériau pulvérulent dans le gaz porteur pour une injection pneumatique et/ou par réglage du débit d'injection dans la zone de fusion du four doit être réalisé de manière à éviter une dispersion et/ou une accumulation de matériau pulvérulent non fondu dans la zone de fusion, de manière à optimiser le transfert thermique initial décrit précédemment entre le matériau injecté et le bain de fusion, à éviter l'envol du matériau pulvérulent dans la zone de fusion et de préférence de manière à donner au bain de fusion un mouvement sensiblement dans la direction de la composante horizontale d'injection du matériau pulvérulent dans le four.

Le matériau pulvérulent est injecté dans une zone de fusion, pour y être mis en fusion au moyen d'une torche à plasma de façon à obtenir un bain de fusion.

La zone de fusion est de préférence de forme cylindrique mais peut avoir n'importe quelle autre forme, permissive pour le procédé de la présente invention, par exemple elliptique, oblongue, rectangulaire etc...

Lorsque la zone de fusion comprend des réfractaires, ceux-ci sont de préférence sans chrome dans la zone de fusion en contact avec le bain de fusion de manière à éviter toute pollution du verre ou du matériau cristallisée, obtenu par le procédé de l'invention, par du chrome hexavalent.

Les réfractaires de la zone de fusion et de la zone de coulée peuvent être par exemple des réfractaires à base d'alumine.

Selon le procédé de l'invention, la torche à plasma est de préférence une torche à plasma d'arc non transféré. Des exemples d'une telle torche sont décrits par exemple dans les demandes de brevets FR-A-2 735 941 et FR-A-2 735 940 et FR-A-2 735 939.

Selon le procédé de l'invention, une ou plusieurs torches à plasma peuvent être utilisées.

Selon le procédé de l'invention, la torche à plasma peut être remplacée par tout moyen de chauffage permissif pour le procédé de l'invention.

La torche à plasma est un équipement qui permet de délivrer un flux d'air à haute température, de l'ordre de 4000°C, par réchauffage d'air au moyen d'un arc électrique en courant continu. A cette température, l'air est partiellement ionisé ce qui caractérise le plasma. La torche à plasma d'arc non transféré se caractérise de plus par le fait que l'arc électrique est dans la torche à plasma, et que le plasma créé s'écoule à partir de cette torche.

L'air utilisé dans cet exemple peut être remplacé par un autre gaz plasmagène, par exemple de l'oxygène ou de l'air enrichi en oxygène.

Un avantage lié au choix de la torche à plasma d'arc comme moyen de chauffage, et au choix du gaz plasmagène c'est-à-dire l'air ou l'oxygène, selon le procédé de la présente invention, est la transformation des métaux lourds en oxydes à haut point de fusion, obtenue avec l'oxygène apporté par la torche, conduisant à un taux de piégeage élevé de métaux lourds.

Un autre avantage lié au choix de la torche à plasma d'arc non transféré selon le procédé de l'invention est qu'elle délivre des écoulements plasma dont la température au niveau du bain de fusion est inférieure à 2500°C, limitant ainsi les phénomènes d'évaporation des métaux lourds.

Un autre avantage lié au choix de la torche à plasma d'arc non transféré est décrit dans les exemples.

Selon le procédé de l'invention, la torche à plasma d'arc non transféré est dirigée vers le bas pour un écoulement du plasma sensiblement central, sur le bain de fusion, par rapport à ce dernier, dans la zone de fusion. Cet écoulement central limite les risques de projection du bain vers les parois du four et donc la formation de zones d'usure prématurée de ces parois.

Selon l'invention, la torche à plasma peut être réglée en puissance, en hauteur dans le four par rapport à la surface du bain de fusion et en inclinaison par rapport à la surface du bain de fusion.

Selon le procédé de l'invention, la torche à plasma d'arc non transféré est dirigée vers le bas, et peut être réglée inclinée pour un écoulement plasma sensiblement dans la direction d'injection du matériau pulvérulent. Cette inclinaison peut être d'environ 45 à 90° par rapport à la surface du bain de fusion, 90° correspondant à un écoulement vertical vers le bas du plasma créé par la torche.

De préférence, la puissance du plasma s'écoulant dans la zone de fusion peut être réglée de manière à obtenir un bain de fusion de préférence à une température de 1300 à 1500°C. Le réglage de la puissance de la torche à plasma et de sa hauteur dans la zone de fusion est fonction du volume de bain de fusion et du niveau de celui-ci dans la zone de fusion à la fois pour préserver les réfractaires au niveau de l'écoulement plasma et pour optimiser le chauffage, du réglage de l'injection du matériau pulvérulent et du tirage du bain de fusion, et de la température du bain de fusion.

La température du bain de fusion doit être assez élevée pour entraîner la fusion totale du matériau pulvérulent injecté dans le four, mais pas trop élevée pour optimiser le bilan thermique de fusion du matériau pulvérulent en évitant une perte d'énergie inutile. Cette température est donc aussi fonction du matériau pulvérulent.

L'injection du matériau pulvérulent précédemment décrite est découplée de l'écoulement plasma, de telle manière que le matériau soit piégé dans le bain dès son contact avec celui-ci sans être repoussé par l'écoulement du plasma, limitant ainsi un envol résiduel des particules non fondues vers les parois non immergées du four ou par exemple vers des moyens de récupération des gaz et fumées de la mise en fusion du matériau.

Lorsque le procédé de l'invention est réalisé avec une torche à plasma d'arc transféré, et lorsque le matériau pulvérulent n'est pas conducteur à froid, la torche à plasma d'arc transféré peut être couplée ou assistée d'une torche à plasma d'arc non transféré pour mettre en fusion le matériau pulvérulent au début du procédé, la torche à plasma d'arc transféré peut ensuite fonctionner seule.

Le procédé de l'invention permet d'obtenir un bain de fusion du matériau pulvérulent de faible viscosité, et du fait de la faible viscosité de ce bain de fusion, l'écoulement plasma lui-même très visqueux déforme la surface du bain. Cette déformation peut atteindre environ 10 cm en dépression du niveau du bain de fusion par rapport au niveau de bain de fusion sans déformation. Cette déformation a pour conséquence :
- d'améliorer le transfert thermique du fait de l'augmentation de la surface d'échange entre le plasma et le bain, et
- de créer des mouvements hydrodynamiques dans le bain qui participent à son homogénéisation et donc à la qualité du matériau vitrifié obtenu.

Une des originalités du procédé de la présente invention est donc qu'il utilise l'impact de l'écoulement plasma engendré par la torche à arc non transféré.

Selon le procédé de l'invention, la zone de fusion en contact avec le bain de fusion peut être refroidie par exemple au moyen d'un circuit de refroidissement par eau de la zone de fusion en contact avec le bain de fusion, pour un fonctionnement en auto-creuset protecteur destiné à augmenter la durée de vie des réfractaires immergés dans le bain de fusion du four.

Selon le procédé de l'invention, un auto-creuset d'un matériau compatible avec les matériaux réfractaires de la zone de fusion et de la zone de coulée, c'est-à-dire non corrosif, et présentant le même comportement que ces matériaux réfractaires à haute température, peut aussi être formé dans le four. Le matériau compatible peut par exemple avoir une température de fusion supérieure à celle du matériau pulvérulent injecté dans le four, de manière à rester solide lors de la fusion de ce dernier. Ce matériau peut par exemple être un mélange de Al₂O₃, CaO et SiO₂.

Un auto-creuset est destiné à limiter la corrosion chimique des réfractaires de la zone de fusion immergée par le bain de fusion, en limitant la migration d'éléments corrosifs à haute température dans la paroi réfractaire en les figeant.

Le bain de fusion obtenu est extrait du four dans une zone de coulée, par débordement dans ladite zone de coulée, sensiblement selon la composante horizontale d'injection du matériau pulvérulent dans le four et à l'opposé du moyen d'injection du matériau dans le four par rapport à la zone de fusion précédemment décrite.

L'injection du matériau pulvérulent est donc sensiblement à l'opposé de la coulée du bain de fusion hors du four. Cette disposition permet notamment de contrôler le temps de séjour du matériau dans le four et d'homogénéiser le bain fondu.

Selon le procédé de l'invention, le bain de fusion débordant dans la zone de coulée du four, hors du four, est refroidi par des moyens de refroidissement, par exemple des écrans de refroidissement, placés à l'extérieur du four, le long de la coulée par gravité du bain de fusion.

Selon le procédé de l'invention, le débordement du bain de fusion peut être réglé par exemple par réglage du niveau de débordement du bain de fusion au moyen par exemple d'une butée de débordement mobile et réglable, placée à l'extrémité de la zone de coulée du four opposée à la zone de fusion, c'est-à-dire au niveau du débordement du bain de fusion hors du four.

Selon le procédé de l'invention, le bain de fusion débordant de la zone de coulée peut être tiré en un matériau vitrifié.

Le tirage du bain de fusion peut s'effectuer par exemple à l'aide d'un laminoir à rouleaux refroidis qui tire le bain de fusion en continu à partir de la zone de coulée du four, et hors du four, et le refroidit en un matériau vitrifié ou cristallisé.

Un avantage du procédé selon l'invention lorsque le tirage du bain de fusion est effectué au moyen d'un laminoir à rouleaux refroidis est de pouvoir adapter les dimensions du produit vitrifié en agissant sur la distance entre les rouleaux de tirage et la forme de ces rouleaux, ce qui permet d'adapter la forme du vitrifiat obtenu au domaine d'utilisation pour la valorisation de ces vitrifiats. Un autre avantage de ce procédé lié au tirage et refroidissement couplés, par exemple à l'aide d'un laminoir à rouleaux refroidis, est qu'il peut permettre de régler le refroidissement des rouleaux pour agir sur le processus de vitrification ou de cristallisation en fonction des caractéristiques mécaniques requises pour le verre ou le matériau cristallisé obtenues.

Le tirage du bain de fusion est effectué à une certaine vitesse de tirage ou à une certaine vitesse de débordement, en fonction du niveau de bain de fusion dans la zone de coulée, et donc du niveau de bain de fusion dans la zone de fusion et de l'injection du matériau pulvérulent, de manière à maintenir sensiblement constant le niveau de bain de fusion dans la zone de fusion. Le réglage de la vitesse de tirage du bain de fusion doit permettre d'optimiser le processus de fusion du matériau pulvérulent en maîtrisant le temps de séjour du matériau en fusion dans le four de manière à obtenir un verre dense, homogène, ne comportant pas d'amas de matériau pulvérulent non fondu et en évitant les dépenses d'énergie de chauffage inutiles.

Selon l'invention, la zone de fusion du matériau pulvérulent peut être maintenue en légère dépression par tout moyen connu, par exemple au moyen d'un ventilateur d'extraction des gaz et fumées et au moyen d'un registre placé dans la zone de coulée du bain de fusion. Cette légère dépression permet d'éviter des fuites de gaz et fumées, qui peuvent être toxiques, à l'extérieur du four par des fuites du four ou par la zone de coulée au niveau du débordement du bain de fusion.

De préférence selon le procédé de l'invention, le niveau du bain de fusion dans la zone de fusion est sensiblement constant dans la zone de fusion et par exemple de préférence de l'ordre de 100 à 500 mm, lorsque le procédé n'utilise qu'une torche et que le diamètre de la zone de fusion est d'environ 1500 mm, de préférence d'environ 300 mm.

D'autre part, par exemple, pour un four ayant un diamètre d'environ 1500 mm, une hauteur de torche de 450 à 950 mm par rapport à la surface du bain de fusion et une hauteur de zone de fusion de 500 à 1500 mm, de préférence, le débit d'injection du matériau pulvérulent, selon le procédé de l'invention peut être réglé à un débit de 100 à 700 kg de matériau par heure, de toute préférence de 300 à 700 kg de matériau pulvérulent par heure. De plus, pour de telles dimensions et un tel débit d'injection, la puissance de la torche à plasma peut être réglée à environ 150 à 700 kW pour une hauteur de torche d'environ 450 à environ 950 mm.

De préférence, selon le procédé de l'invention, le temps de séjour du matériau en fusion dans le four, compté à partir de l'injection du matériau pulvérulent jusqu'au débordement et/ou tirage est au moins égal à 30 minutes, de préférence de 60 minutes environ.

Selon le procédé de l'invention, l'injection du matériau pulvérulent dans le four peut être réglée par réglage des composantes verticale et horizontale d'injection et/ou par réglage d'une injection sur ou dans le bain de fusion et/ou par réglage du débit d'injection et/ou de la fraction massique du matériau dans le gaz de transport pour l'injection ; la torche à plasma peut être réglée par réglage de sa hauteur dans la zone de fusion et donc par réglage de la hauteur de l'écoulement plasma sur le bain de fusion, par réglage de son inclinaison dans le four et par réglage de sa puissance ; le débordement du bain de fusion peut être réglé par exemple par réglage d'une butée de débordement mobile, et le tirage du bain de fusion peut être réglé par exemple par réglage de la vitesse de tirage du bain de fusion qui peut être couplé à un réglage de refroidissement des moyens de tirage du bain de fusion.

Selon le procédé de l'invention, l'injection du matériau pulvérulent dans le four, la torche à plasma et le tirage du bain de fusion sont de préférence régulés.

Les régulations selon le procédé de l'invention peuvent par exemple être destinées à maintenir sensiblement constant le niveau du bain de fusion dans la zone de fusion et/ou dans la zone de coulée, en régulant l'injection du matériau pulvérulent dans le four et le tirage du bain de fusion.

Le maintien du niveau du bain de fusion dans la zone de coulée à un niveau constant peut être réalisé par exemple au moyen d'une boucle de régulation du niveau de bain de fusion. Cette boucle de régulation peut avoir pour donnée de base une valeur optimale de niveau du bain de fusion dans la zone de coulée. Trois plages de niveau de bain de fusion peuvent par exemple être définies :
- une plage haute dans laquelle le niveau du bain de fusion dans la zone de coulée est trop haut ; la valeur du niveau de bain de fusion dans cette plage haute commande au moyen de cette boucle de régulation le moyen de débordement, par exemple le réglage d'une butée de débordement, et/ou la vitesse de tirage du bain de fusion, par exemple la vitesse de rotation des rouleaux d'un laminoir ; plus le niveau est élevé, plus le débordement est important, c'est-à-dire la butée de débordement est basse, et/ou le tirage du bain de fusion, c'est-à-dire la vitesse de rotation des rouleaux du laminoir, est rapide ; l'injection du matériau pulvérulent quant à elle reste constante ;
- une plage médiane dans laquelle le niveau du bain de fusion dans la zone de coulée est sensiblement égal à la valeur de niveau optimale requise pour un processus de fusion optimal dans la zone de fusion résultant d'un équilibre entre l'injection du matériau pulvérulent dans le four et le tirage du matériau en fusion hors du four ; le débordement et/ou la vitesse de tirage et l'injection sont maintenus constants au moyen de cette boucle de régulation et tels que définis pour le niveau de bain de fusion requis pour le processus de fusion optimal dans la zone de fusion ;
- une plage basse dans laquelle le niveau du bain de fusion dans la zone de coulée est trop bas ; la valeur du niveau du bain de fusion dans cette plage commande au moyen de cette boucle de régulation la quantité de matériau pulvérulent injecté ; plus le niveau du bain de fusion est bas, plus la quantité de matériau pulvérulent injecté augmente ; dans cette plage basse de niveau, le débordement et/ou la vitesse de tirage reste constant(s) et telle que définie initialement pour le processus optimal de fusion dans la zone de fusion.

Le niveau du bain de fusion dans la zone de coulée et/ou dans la zone de fusion peut être déterminé au moyen d'un capteur de niveau du bain de fusion, par exemple des cellules photoélectriques, un flotteur, etc...

La régulation du débit d'injection du matériau pulvérulent dans le four, de la puissance de la torche à plasma et du tirage du bain de fusion permet d'optimiser le processus de fusion en garantissant un bain de fusion homogène sans amas de matériau pulvérulents non fondus, conduisant à un matériau vitrifié homogène et de grande qualité, et en maîtrisant le temps de séjour des résidus dans la zone de fusion, conduisant à un bilan thermique contrôlé et optimum.

Les régulations selon le procédé de l'invention peuvent par exemple être destinées à maintenir sensiblement constantes les températures du bain de fusion et de la zone de coulée en régulant l'injection du matériau pulvérulent dans le four et la puissance et/ou la hauteur de la torche à plasma.

Le maintien des températures du bain de fusion et de la zone de coulée à un niveau sensiblement constant peut être réalisé par exemple au moyen d'une boucle de régulation de ces températures. Cette boucle de régulation peut avoir pour donnée de base une valeur optimale de température du bain de fusion et de la zone de coulée.

Le but de cette régulation est de commander au moyen de cette boucle de régulation la puissance de la torche à plasma d'arc non transféré en fonction du débit d'injection du matériau pulvérulent dans le four, de la température du bain de fusion dans la zone de coulée, et de la température de la zone de coulée. La puissance de la torche doit permettre de compenser les pertes thermiques du four et de fondre la totalité du matériau pulvérulent injecté.

La température du bain de fusion peut être déterminée au moyen de capteurs de température placés dans et/ou au-dessus du bain de fusion, dans la zone de fusion et/ou dans la zone de coulée du four.

Plusieurs situations peuvent se présenter, par exemple si les températures du bain de fusion et de la zone de coulée sont trop importantes, c'est-à-dire supérieures à la valeur optimale de température requise, la boucle de régulation commande la diminution de la puissance de la torche ; si les températures du bain de fusion et de la zone de coulée sont trop faibles, c'est-à-dire inférieure à la valeur optimale de température requise, la boucle de régulation commande l'augmentation de la puissance de la torche, si la température du bain de fusion est trop faible et la température de la zone de coulée est trop importante, la boucle de régulation commande par exemple un système d'alerte. Dans ce dernier cas, la régulation peut commander la diminution de la puissance de la torche et une mise en route d'un moyen de chauffage par exemple au niveau du moyen de tirage du bain de fusion, ainsi qu'une augmentation du débit d'injection du matériau pulvérulent et du tirage du bain de fusion.

Les régulations selon le procédé de l'invention peuvent par exemple être destinées à maintenir sensiblement constante la température de la zone de fusion en régulant la hauteur de la torche à plasma.

Le maintien de la température de la zone de fusion à un niveau sensiblement constant peut être réalisé par exemple au moyen d'une boucle de régulation de la température de la zone de fusion.

Le but de cette régulation est d'augmenter au moyen de cette boucle de régulation le transfert thermique torche/plasma sans toutefois engendrer des contraintes au niveau de réfractaires du four immergés par le bain de fusion. Les paramètres intervenant dans cette régulation sont la puissance de la torche, a priori réglée en fonction du débit d'injection du matériau pulvérulent ; la température de la zone de fusion immergée par le bain de fusion mesurée par exemple au moyen de capteurs de température placés dans ou sur une paroi du four de préférence au niveau de la zone de fusion sensiblement au niveau de l'écoulement du plasma de la torche ; et la hauteur de la torche par rapport au bain de fusion dans la zone de fusion par exemple à une puissance de torche à plasma donnée, la hauteur de la torche par rapport à la surface du bain de fusion sera réglée pour permettre d'optimiser le transfert d'énergie au bain de fusion tout en évitant de trop chauffer la paroi du four immergée par le bain de fusion au niveau de l'écoulement plasma.

Les régulations et boucles de régulation, d'injection, de la torche et de débordement et/ou de tirage du bain de fusion selon le procédé de l'invention sont de préférence utilisées simultanément.

Selon le procédé de l'invention, la mise en fusion du matériau pulvérulent entraînant la formation de fumées et de gaz, lesdits fumées et gaz sont extraits du four à haute température.

Les gaz produits peuvent comprendre par exemple des dioxines, des furanes et des sels de métaux lourds.

Le procédé de l'invention présente un avantage supplémentaire lié à l'utilisation d'une torche à plasma d'arc non transféré et donc à une configuration "bain ouvert", de pouvoir extraire facilement du four les fumées et gaz produits à haute température.

De plus, selon la procédé de l'invention, la zone de fusion peut être maintenue en très légère dépression par rapport à la pression atmosphérique par exemple au moyen d'un ventilateur d'extraction pour le traitement des fumées et d'un registre séparant partiellement la zone de fusion de la zone de coulée pour éviter des rejets gazeux toxiques vers l'atmosphère.

Selon le procédé de l'invention, ces fumées et gaz sont extraits à environ 1500°C, ce qui évite une condensation de sels corrosifs sur les parois du four, préjudiciables à un fonctionnement industriel longue durée de ce procédé. Compte tenu d'un temps de séjour dans la zone de fusion d'environ 2 secondes à cette température, les dioxines et furanes sont et restent décomposés.

Ces fumées et gaz extraits du four sont repris et trempés par exemple avec de l'eau, l'eau servant à refroidir les fumées et gaz à la sortie du four, dans un dispositif de trempe ce qui évite la reformation des dioxines et furanes.

Selon le procédé de l'invention, les fumées et gaz extraits peuvent être traités et neutralisés dans une installation classique de traitement des effluents gazeux utilisée par exemple en centre d'incinération de déchets.

En outre, le procédé de l'invention peut être mis en ligne avec un procédé classique d'incinération d'ordures ménagères préexistant et les fumées et gaz issus du procédé de l'invention peuvent être traités en ligne avec un procédé classique de traitement des effluents gazeux par exemple dudit procédé d'incinération d'ordures ménagères préexistant.

Selon le procédé de l'invention, un ou plusieurs additifs peuvent être injectés dans le four en même temps que le matériau pulvérulent. Ces additifs sont par exemple des additifs de fluidité, de glissement du bain de fusion dans le four, d'homogénéité du bain de fusion, de formation de matrice de verre ou un mélange de ces additifs.

La présente invention se rapporte également à un dispositif pour la mise en oeuvre du procédé de l'invention précédemment décrit.

Le dispositif selon l'invention est un dispositif de vitrification en continu d'un matériau pulvérulent comprenant un four incluant une zone de fusion du matériau pulvérulent et une zone de coulée du matériau en fusion, au moins un moyen d'injection du matériau pulvérulent, au moins une torche à plasma, et au moins un moyen de débordement du bain de fusion, le(s) moyen(s) d'injection du matériau pulvérulent étant latéral (latéraux) à la zone de fusion du four et dirigé(s) selon une(des) direction(s) d'injection comprenant une composante horizontale, la(les) zone(s) de coulée étant orientée(s) sensiblement selon ladite composante horizontale et sensiblement à l'opposé dudit(desdits) moyen(s) d'injection, par rapport à la zone de fusion, ladite(lesdites) zone(s)de coulée étant une(des) zone(s) de débordement de ladite zone de fusion et comprenant une première et une deuxième extrémités, la(les) première(s) extrémité(s) de la (des) zone(s) de coulée étant en contact avec la zone de fusion, la(les) deuxième(s) extrémité(s) de la zone de coulée étant en contact avec le(s) moyen(s) de débordement du bain de fusion, ledit moyen de débordement étant positionné pour un(des) débordement(s) du bain de fusion selon une(des) direction(s) sensiblement horizontale(s).

Selon l'invention, le dispositif comprend en outre un(des) moyen(s) de tirage du bain de fusion, couplé(s) au(x) moyen(s) de débordement du bain de fusion.

Selon l'invention, la torche à plasma est de préférence une torche à plasma d'arc non transféré.

Selon l'invention, la zone de fusion du four peut être de n'importe quelle forme permissive pour la mise en oeuvre du procédé de l'invention, par exemple de forme elliptique, oblongue, rectangulaire, circulaire, etc... de préférence la zone de fusion du four est de forme cylindrique, le bain de fusion étant de préférence dans une partie circulaire de la forme cylindrique.

La zone de fusion peut comprendre des réfractaires de préférence constitués d'alumine et sans chrome pour ceux de la zone de fusion immergés par le bain de fusion, la présence de chrome provoquant une pollution par du chrome hexavalent du bain de fusion à haute température et une pollution des gaz et fumées issus de la mise en fusion du matériau pulvérulent. Les réfractaires de la zone de fusion non immergés par le bain de fusion, c'est-à-dire sollicités par les gaz et les fumées de mise en fusion du matériau pulvérulent, peuvent être constitués d'alumine et éventuellement ils peuvent comprendre une faible quantité de chrome pour améliorer leur tenue thermique, en particulier aux chocs thermiques. Ces réfractaires sont de préférence structurés en multicouches.

Selon le dispositif de l'invention le moyen d'injection peut être par exemple un dispositif d'injection en phase pneumatique, à vis ou à poussoir. De préférence, le moyen d'injection est un dispositif d'injection en phase pneumatique.

Selon l'invention, ce moyen d'injection est de préférence disposé latéralement à la zone de fusion du four et dirigé selon une direction d'injection comprenant une composante horizontale, et pouvant comprendre en outre une composante verticale orientée vers le bas.

Par exemple, le moyen d'injection est disposé de telle façon qu'il permet d'injecter le matériau pulvérulent avec un angle de 0 à 90° par rapport à la surface du bain de fusion, de préférence de 10 à 45° par rapport à la surface du bain de fusion.

Selon l'invention le moyen d'injection peut par exemple se prolonger dans la zone de fusion par une lance se présentant sous la forme d'un tube métallique protégé par un réfractaire. L'injecteur peut être réglable pour une injection du matériau pulvérulent dans ou sur le bain de fusion.

La lance d'injection du matériau pulvérulent dans le four a de préférence un diamètre interne, dans le four, en rapport avec le débit d'injection du matériau. Par exemple, pour un débit d'injection de 350 Kg/h de matériau pulvérulent, tel que décrit dans l'exemple du mode de réalisation de la présente invention, le diamètre interne de la lance peut-être de 20 mm.

Le moyen d'injection selon l'invention peut être réglable en débit d'injection du matériau pulvérulent et/ou en fraction massique de matériau dans le gaz de transport et/ou par réglage des composantes verticales et/ou horizontales d'injection du matériau pulvérulent, et/ou par réglage de l'injection à la surface du bain de fusion ou dans le bain de fusion.

Le dispositif selon l'invention peut comprendre une ou plusieurs torches à plasma d'arc transféré et/ou non transféré.

Lorsque le matériau pulvérulent est non conducteur à froid, une torche à plasma d'arc transféré peut par exemple être couplée à une torche à plasma d'arc non transféré, cette dernière pouvant alors initier le processus de fusion du matériau.

Ces torches à plasma peuvent par exemple être remplacées ou complémentées par un chauffage par brûleur.

De préférence, la torche à plasma est protégée par un fourreau en matériau réfractaire. Ce fourreau réfractaire a pour fonction de limiter les pertes thermiques liées au transfert entre les parois réfractaires à haute température et la torche refroidie et donc d'améliorer le bilan énergétique global de la fusion, et d'éviter la recondensation de sels issus de la fusion du matériau pulvérulent, sur la paroi froide de la torche, cette recondensation aurait en effet pour effet de rendre difficile son retrait pour les opérations de maintenance de la torche et/ou en cas d'urgence.

La torche peut être montée sur une potence mobile qui permet par exemple son déplacement vertical et/ou horizontal et donc l'optimisation de sa position par rapport au bain de fusion.

Selon le dispositif de l'invention, la torche à plasma est réglable en puissance, en hauteur par rapport à la surface du bain de fusion et en inclinaison par rapport à la surface du bain de fusion.

Par exemple, pour un diamètre de zone de fusion du four d'environ 1500 mm, pour un matériau pulvérulent en fusion entre 1300 et 1500°C, pour une hauteur de bain de fusion entre 100 et 500 mm, la puissance de la torche à plasma peut être réglée de 150 à 700 kW de préférence à environ 600 kW, la hauteur de la torche peut être réglée de 450 à 950 mm au-dessus du bain de fusion, de préférence à 700 mm et l'inclinaison de la torche à plasma peut être réglée de 45 à 90° de préférence à 90°.

Selon le dispositif de l'invention, le moyen de débordement du bain de fusion peut être par exemple une butée de débordement, disposée au niveau de la deuxième extrémité de la zone de coulée. Cette butée de débordement peut être mobile et réglable de manière à pouvoir permettre un réglage d'un niveau de débordement du bain de fusion.

Selon le dispositif de l'invention, le moyen de débordement peut être couplé d'écrans de refroidissement pour refroidir le bain de fusion débordant hors du four en un verre ou un matériau cristallisé.

Selon l'invention, le dispositif de débordement peut être remplacé par, ou couplé à, un moyen de tirage du bain de fusion.

Selon le dispositif de l'invention, le moyen de tirage peut être par exemple un dispositif de laminage, ou laminoir, à rouleaux refroidis.

Un tel laminoir présente l'avantage de permettre un réglage de la vitesse de tirage du bain de fusion par réglage de la vitesse de rotation des rouleaux du laminoir, la vitesse de rotation des rouleaux pouvant par exemple être couplée à un système de régulation du refroidissement des rouleaux. Ainsi, lorsque la vitesse de tirage du matériau en fusion est grande, le système de régulation de refroidissement des rouleaux commande un refroidissement plus important des rouleaux, de manière à obtenir un verre de qualité constante.

De plus, un laminoir présente l'avantage de pouvoir guider et de pouvoir calibrer le matériau cristallin ou le verre formé.

Selon un mode de réalisation de l'invention, la zone de coulée peut comprendre un registre qui sépare la zone de fusion de la zone de coulée de manière à maintenir un niveau de dépression dans le four. Ce niveau de dépression est obtenu par exemple au moyen d'un ventilateur d'extraction pour le traitement des fumées et des gaz issus de la mise en fusion du matériau pulvérulent. Ce niveau de dépression permet d'éviter un rejet à l'atmosphère, par la zone de coulée ou par des fuites du four, d'espèces toxiques contenues dans les fumées et les gaz issus de la mise en fusion du matériau pulvérulent. Le registre peut être fixe ou mobile.

Ce registre peut aussi permettre d'obtenir un débit bien régulier du bain de fusion à la sortie du four.

Selon le dispositif de l'invention, le four peut comprendre en outre un carneau d'extraction des fumées et gaz produits lors de la fusion du matériau pulvérulent. Ce carneau est de préférence disposé de manière à extraire les gaz et fumées sans être en contact avec le bain de fusion, soit au niveau de la zone de fusion du four, soit au niveau de la zone de coulée du four.

Ce carneau d'extraction peut par exemple être relié au ventilateur d'extraction précédemment cité.

Selon le dispositif de la présente invention, le moyen d'injection du matériau pulvérulent, la torche à plasma et le moyen de tirage du bain de fusion sont régulés par au moins une boucle de régulation.

Par exemple, le moyen d'injection du matériau pulvérulent dans le four et le moyen de tirage du bain de fusion et/ou le moyen de débordement sont régulés par une boucle de régulation du niveau de bain de fusion dans le four.

La boucle de régulation du niveau de bain de fusion dans le four, c'est-à-dire dans la zone de fusion et/ou dans la zone de coulée du four peut par exemple consister en un système de régulation permettant de commander le réglage de l'injection du matériau pulvérulent dans le four et/ou le réglage du débordement du bain de fusion de la zone de fusion et/ou le réglage du tirage du bain de fusion hors du four, en fonction du niveau du bain de fusion dans la zone de fusion et/ou dans la zone de coulée du four.

Le niveau de bain de fusion peut être déterminé au moyen de capteurs placés dans la zone de fusion et/ou dans la zone de coulée du bain de fusion.

Par exemple lorsque le niveau du bain de fusion dans la zone de coulée est supérieur à une valeur prédéterminée, la boucle de régulation peut commander un tirage plus rapide du bain de fusion par exemple lorsque le tirage est réalisé au moyen d'un laminoir en augmentant la vitesse des rouleaux du laminoir, et laisser l'injection de matériau pulvérulent constante.

Par exemple lorsque le niveau du bain de fusion dans la zone de coulée est inférieur à la valeur prédéterminée, la boucle de régulation peut commander un débit d'injection plus important de matériau pulvérulent dans le four, et un tirage constant du bain de fusion.

Par exemple lorsque le niveau du bain de fusion est sensiblement égal et constant à la valeur prédéterminée, la boucle de régulation peut commander un débit d'injection et une vitesse de tirage constants.

Le moyen d'injection du matériau pulvérulent dans le four et la puissance de la torche peuvent être régulés par une boucle de régulation des températures du bain de fusion et de la zone de coulée.

La boucle de régulation de la température du bain de fusion peut par exemple consister en un système de régulation permettant de commander le réglage de l'injection du matériau pulvérulent dans le four et le réglage de la puissance de la torche à plasma en fonction de la température du bain de fusion et/ou de la zone de coulée.

La température du bain de fusion peut être déterminée au moyen de capteurs placés dans la zone de fusion et/ou dans la zone de coulée immergée(s) par le bain de fusion.

Par exemple, lorsque la température du bain de fusion est trop importante, la boucle de régulation peut commander une baisse de la puissance de la torche, et inversement lorsque la température du bain de fusion est trop faible, la boucle de régulation peut commander une augmentation de la puissance de la torche.

La hauteur de la torche dans le four peut être régulée par une boucle de régulation de la température de la zone de fusion.

La boucle de régulation de la température de la zone de fusion peut par exemple consister en un système de régulation permettant de commander le réglage de la hauteur de la torche en fonction de la température de la zone de coulée.

La température de la zone de fusion, immergée par le bain de fusion, peut être déterminée au moyen de capteurs de température placés dans ou sur une paroi du four immergée par le bain de fusion, de préférence sensiblement au niveau de l'écoulement plasma de la torche.

Par exemple lorsque pour une puissance de torche et un débit d'injection de matériau pulvérulent constants, les capteurs de température détectent une température de zone de fusion supérieure à une valeur prédéterminée, la boucle de régulation peut commander une hauteur de torche plus grande.

Les boucles de régulation du niveau de bain de fusion dans le four, de la température du bain de fusion et de la zone de coulée, et de la température de la zone de fusion peuvent être utilisées séparément, ou simultanément. Elles sont de préférence utilisées simultanément.

Le dispositif selon l'invention peut être utilisé tel qu'il a été décrit précédemment, ou en ligne par exemple avec une installation d'incinération d'ordures ménagères, c'est-à-dire qu'il peut être intégré dans une installation d'incinération d'ordures ménagères préexistante, comprenant de préférence un moyen de traitement d'effluents gazeux issus de l'incinération des ordures ménagères.

Dans ce cas, le dispositif selon l'invention permet de traiter en ligne le matériau pulvérulent issu de l'incinération des ordures ménagères et les gaz et fumées issus de la fusion du matériau pulvérulent sont traités en ligne avec un dispositif de traitement des gaz et fumées de ladite installation d'incinération des ordures ménagères.

Les caractéristiques et avantages de l'invention apparaîtront mieux à la lecture de la description qui va suivre. Cette description porte sur un exemple de réalisation de l'invention donné à titre explicatif et non limitatif en se référant aux dessins annexés.

### Brève description des dessins

- la figure 1 est un schéma détaillé d'une vue en coupe transversale d'un dispositif de vitrification en continu d'un matériau pplvérulent selon l'invention,
- la figure 2 est un schéma d'une vue en coupe du dessus d'un dispositif de vitrification en continu d'un matériau pulvérulent selon l'invention,
- la figure 3 est un schéma d'un agrandissement d'une vue en coupe d'un moyen de tirage du bain de fusion selon l'invention,
- la figure 4 est un schéma d'une vue générale en coupe transversale d'un dispositif de vitrification en continu d'un matériau pulvérulent selon l'invention,
- la figure 5 est un schéma d'une vue en coupe d'un dispositif d'injection par vis pour injecter le matériau pulvérulent dans le four.

### Exemple détaillé d'un mode de réalisation de l'invention

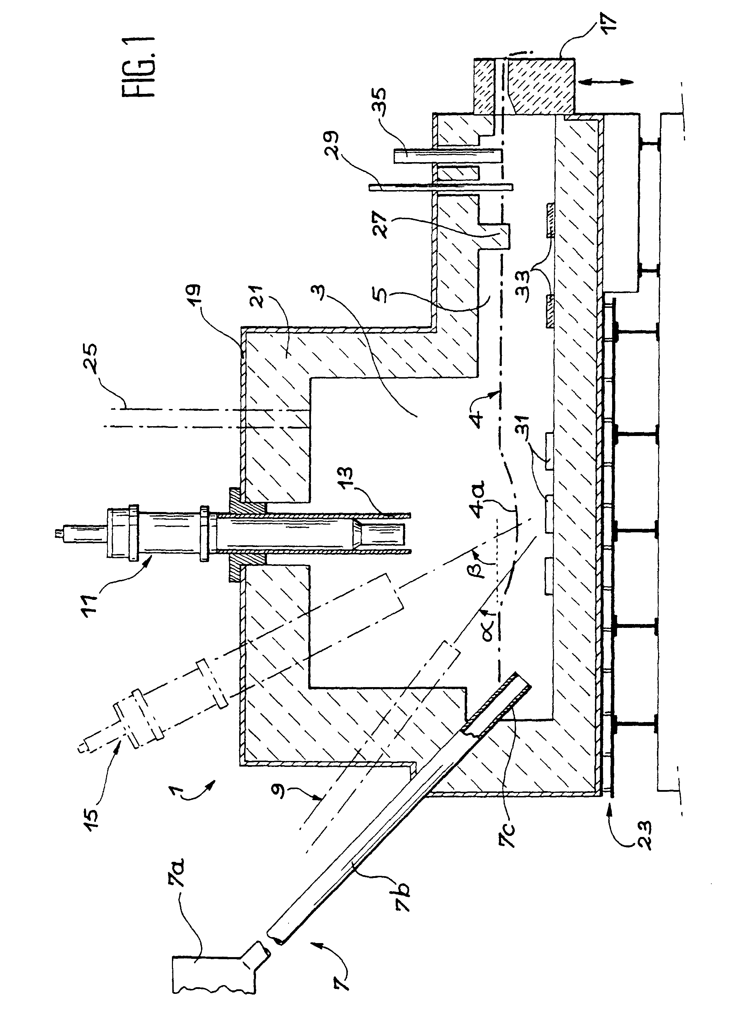

Sur les figures 1 à 4, les mêmes références indiquent les mêmes éléments du mode de réalisation illustré d'un dispositif selon la présente invention.

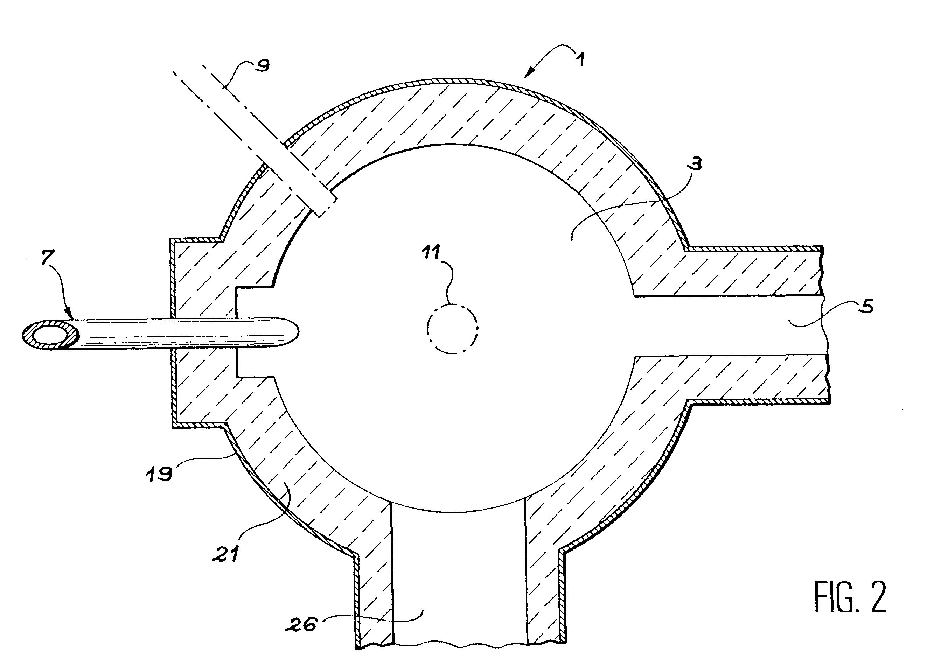

Les figures 1 et 2 illustrent respectivement un schéma d'une vue en coupe transversale et d'une vue en coupe du dessus d'un dispositif pour la mise en oeuvre d'un mode de réalisation du procédé de l'invention.

Sur ces figures, le dispositif comprend un four 1 incluant une zone de fusion 3 d'un matériau pulvérulent, et une zone de coulée 5 d'un bain de fusion 4. Ce dispositif comprend en outre un moyen d'injection 7 du matériau pulvérulent dans le four, une torche à plasma d'arc non transféré 11 et un moyen de débordement 17 du bain de fusion.

La zone de fusion 3 est circulaire et définie par une paroi constituée d'une enveloppe 19 métallique externe et d'une structure de réfractaires 21 multicouches internes constituée essentiellement d'alumine. Les réfractaires en contact avec le bain de fusion ainsi que ceux susceptibles d'être en contact avec celui-ci ne comprennent pas de chrome pour éviter la pollution dudit bain de fusion, et des eaux de traitement des fumées issues de la mise en fusion du matériau pulvérulent, par du chrome hexavalent.

Les réfractaires qui ne sont pas en contact avec le bain de fusion peuvent éventuellement comprendre un faible pourcentage de chrome, pour améliorer leur tenue thermique notamment aux chocs thermiques.

Pour limiter la corrosion chimique des réfractaires de la zone de fusion 3 en contact avec le bain de fusion 4, il est créé une barrière thermique par la mise en place d'un circuit 23 de refroidissement par eau. Cette barrière thermique entraîne la formation d'un auto-creuset à partir du bain de fusion 4. Ce dernier limite la migration des éléments corrosifs dans les réfractaires en les figeant dans l'auto-creuset.

Le diamètre interne de la zone de fusion 3 est de 1500 mm et la hauteur de la zone de fusion 3 est de 950 mm.

La zone de fusion 3 en contact avec le bain de fusion 4 est dénommée cuve, les parois latérales du four sont dénommées piédroits, et la partie supérieure du four est dénommée voûte.

Le moyen d'injection 7 est un injecteur 7a en phase pneumatique et l'injection du matériau pulvérulent est réalisée avec un gaz porteur en phase dense. L'injecteur 7a est prolongé par un tube métallique 7b, ou lance, qui permet de conduire le matériau pulvérulent dans le four. Cette lance 7b est protégée à l'intérieur du four par un réfractaire 7c.

Le moyen d'injection 7 est réglable de telle manière que l'injection de matériau pulvérulent peut ètre réalisée dans ou sur le bain de fusion 4 et dirigeable selon une direction d'injection comprenant une composante horizontale et une composante verticale orientée vers le bas variables.

Sur les figures 1 et 2, la référence 7 indique une position nominale d'injection du matériau pulvérulent dans le bain de fusion 4 et la référence 9 indique un exemple d'une position d'injection alternative du matériau pulvérulent sur le bain de fusion 4. L'angle α sur la figure 1 indique la direction alternative d'injection du matériau pulvérulent dans la zone de fusion, par rapport à la surface du bain de fusion 4 représentée en pointillés horizontaux. Cet angle α de direction alternative est inférieur à l'angle non représenté de la direction nominale d'injection par le moyen d'injection 7.

Le dispositif 1 comprend également une torche à plasma d'arc non transféré 11. Cette torche est du type de celle décrite dans les demandes de brevets FR-A-2 735 941, FR-A-2 735 940 et FR-A-2 735 939. Cette torche à plasma comprend un dispositif de refroidissement non représenté et un fourreau réfractraire 13. Ce dernier a pour fonction de limiter les pertes thermiques liées au transfert de températures entre les parois réfractaires du four à haute température et la torche à plasma refroidie. Ce fourreau réfractaire a donc pour fonction d'améliorer le bilan énergétique global du procédé de l'invention.

Ce réfractaire a également pour rôle d'éviter la recondensation de sels des gaz et fumées issus du processus de fusion sur la paroi froide de la torche, ce qui aurait pour effet de créer des difficultés à son retrait par exemple lors des opérations de maintenance ou en cas d'urgence.

La torche 11 est montée sur une potence qui permet son déplacement vertical et donc l'optimisation du chauffage par réglage de sa position par rapport au bain de fusion.

Sur la figure 1, l'angle β indique l'angle d'une position alternative de la torche à plasma d'arc non transféré par rapport à la position verticale précédemment décrite, selon une variante du procédé de l'invention.

En plus de la torche à plasma, le dispositif décrit peut comprendre des brûleurs d'appoint non représentés, montés sur les parois latérales du four ou piédroits. Ces brûleurs sont utilisés alternativement et peuvent permettre de maintenir constante la température du four à la température de fusion pendant les phases d'arrêt du procédé, de manière à éviter les chocs thermiques sur les réfractaires et à maintenir le matériau pulvérulent en fusion permettant ainsi un redémarrage immédiat du procédé.

La zone de coulée 5, à l'opposée du moyen d'injection 7 par rapport à la zone de fusion 3, est une zone de débordement du bain de fusion 4 à partir de ladite zone de fusion 3. Cette zone de coulée 5 comprend une première et une deuxième extrémités, la première extrémité de la zone de coulée 5 étant en contact avec la zone de fusion 3, la deuxième extrémité de la zone de coulée étant en contact avec un moyen de débordement 17 du bain de fusion 4.

Le moyen de débordement 17 est une butée mobile et réglable verticalement. Il permet de contrôler et de régler le niveau de débordement du bain de fusion 4 dans la zone de fusion et dans la zone de coulée.

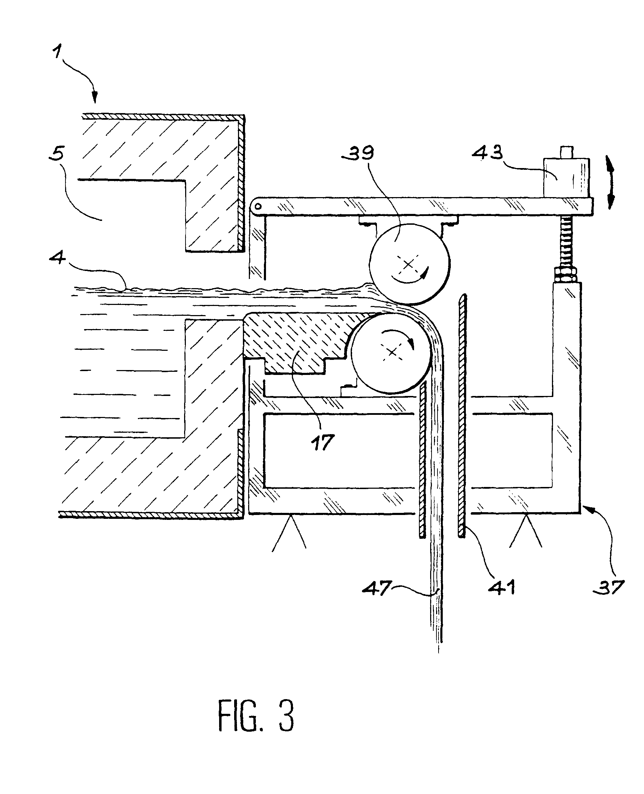

Ce moyen de débordement peut être remplacé et/ou complémenté par un laminoir à rouleaux rotatifs refroidi qui tire le bain de fusion à l'extérieur du four à partir de cette zone de coulée. Un tel laminoir est représenté sur la figure 3 par la référence 37. Sur cette figure la zone de coulée 5 est couplée à un moyen de débordement mobile et réglable 17 du bain de fusion 4, et au laminoir 37. Ce laminoir 37 comprend des rouleaux rotatifs 39 refroidis qui tirent le bain de fusion 4 débordant du moyen de débordement, à partir de la zone de coulée, à l'extérieur du four.

Le dispositif illustré sur cette figure 3 comprend en outre des écrans de refroidissement 41 qui participent à la transformation du bain de fusion 4 par refroidissement en verre amorphe 47 ou en matériau cristallisé, et un dispositif 43 de réglage de la hauteur du laminoir et de la butée de débordement. De plus, les rouleaux rotatifs sont réglables par leur vitesse et par leur refroidissement permettant ainsi de régler le tirage du bain de fusion.

Sur la figure 1, le dispositif 1 comprend également dans la zone de coulée un registre 27 séparant la zone de fusion de la zone de coulée de manière à maintenir un niveau de dépression dans le four obtenu grâce à un ventilateur d'extraction non représenté des gaz et fumées issus de la mise en fusion du matériau pulvérulent, par un conduit 25.

Les inventeurs ont également remarqué que ce registre permet d'éliminer du matériau pulvérulent non fondu, appelé encore infondu, en forçant les échanges thermiques entre le bain de fusion et l'infondu. Il participe donc également à la qualité du vitrifiat obtenu.

Ce dispositif comprend également un capteur de température 29 permettant de contrôler la température du bain de fusion dans la zone de coulée, des capteurs 31 de température permettant de contrôler la température des réfractaires immergés par le bain de fusion dans la zone de fusion sensiblement au niveau de la coulée de plasma de la torche, des capteurs de température 33 situés dans la zone de coulée et un capteur 35 du niveau de bain de fusion dans la zone de coulée. Ce dernier est un capteur de niveau sans contact, à effet capacitif.

Sur la figure 1, la référence 4a indique la déformation de la surface du bain de fusion dans la zone de fusion provoquée par l'écoulement plasma de la torche à plasma. Cette déformation participe à l'augmentation de la surface d'échange thermique entre le plasma et le bain de fusion et à l'homogénéisation du bain de fusion dans la zone de fusion.

Le dispositif illustré sur la figure 1 comprend en outre trois boucles de régulation X, Y, Z non représentées.

Une première boucle de régulation, appelée boucle X, du niveau du bain de fusion dans le four. Cette boucle de régulation est destinée à réguler le moyen d'injection 7 du matériau pulvérulent dans le four 1, le moyen de débordement 17 du bain de fusion et le moyen de tirage 37 du bain de fusion du four en fonction du niveau du bain de fusion 4 dans la zone de coulée 5. La boucle de régulation X a pour fonction de recevoir les informations concernant le niveau du bain de fusion 4 captées par le capteur 35 du niveau de bain de fusion, et de commander, en fonction de ces informations, un débit d'injection du matériau pulvérulent plus ou moins important en commandant le moyen d'injection 7 ; et/ou un débordement du bain de fusion plus ou moins important en commandant la position de la butée de débordement 17 ; et/ou une vitesse de tirage plus ou moins importante du bain de fusion par le laminoir 37 en commandant une vitesse plus ou moins importante de rotation des rouleaux rotatifs 39 du laminoir ; de manière à maintenir sensiblement constant niveau de bain de fusion 4 dans la zone de coulée 5, c'est-à-dire un niveau de bain de fusion compris entre 300 et 500 mm.

Une seconde boucle de régulation, appelée boucle Y, destinée à réguler les températures du bain de fusion et de la zone de coulée. Cette boucle de régulation régule le moyen d'injection 7 du matériau pulvérulent dans le four et la puissance de la torche 11. La boucle de régulation Y est chargée de recevoir les informations captées par le capteur 29 de température du bain de fusion 4 dans la zone de coulée 5 et les capteurs 33 de température de la zone de coulée 5 et de commander une puissance plus ou moins importante de la torche 11 et/ou un débit d'injection plus ou moins important du matériau pulvérulent de manière à maintenir sensiblement constantes les températures du bain de fusion et de la zone de coulée, c'est-à-dire comprises entre 1300 et 1500°C.

Une troisième boucle de régulation appelée boucle Z destinée à réguler la température de la zone de fusion 3. Cette boucle de régulation régule la hauteur de la torche dans le four. La boucle de régulation Z est chargée de recevoir les informations captées par les capteurs 31 de température de la zone de fusion immergée par le bain de fusion, et de commander une hauteur de torche plus ou moins grande de manière à maintenir sensiblement constante la température de la zone de fusion, c'est-à-dire entre 1300 et 1500°C.

La hauteur de la torche pour un niveau de bain de fusion dans la zone de fusion de 300 à 500 mm est de 450 à 1000 mm.

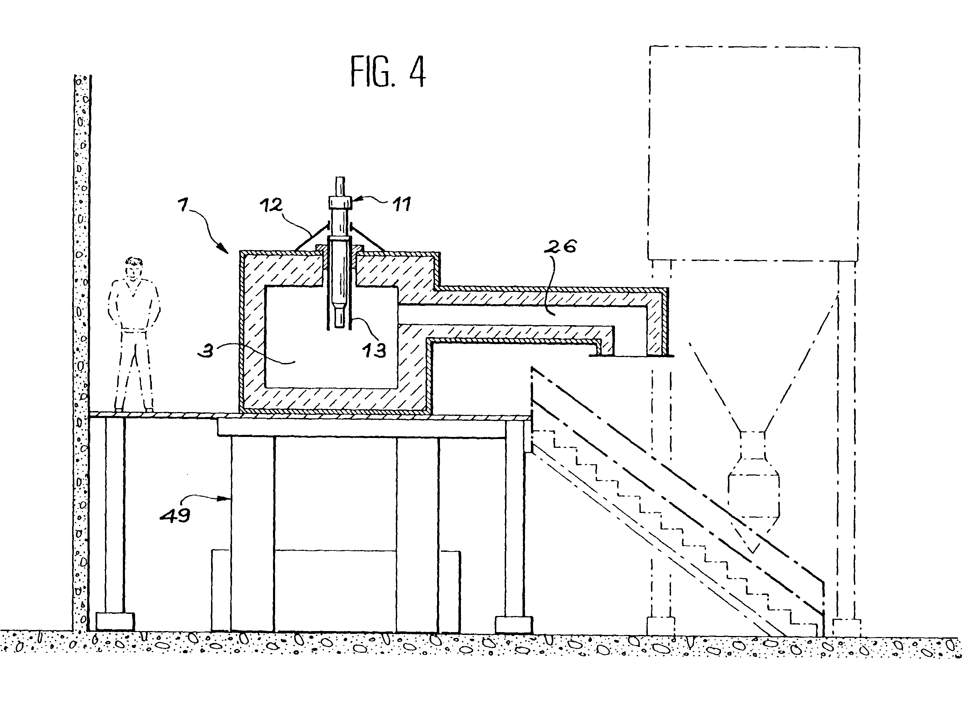

La figure 4 est une vue générale en coupe transversale du mode de réalisation du dispositif de l'invention décrit sur les figures 1 à 3.

Cette figure permet d'illustrer la présence d'un carneau 26 d'extraction des gaz et fumées issus de la mise en fusion du matériau pulvérulent, la présence d'une potence 12 réglable supportant la torche 11 et d'une structure 49 supportant le dispositif de l'invention selon ce mode de réalisation.

La capacité de traitement du four de cet exemple peut varier de 150 à 400 kg de matériau pulvérulent et éventuellement d'additifs, par heure en réglant le moyen d'injection en phase dense.

Dans cet exemple, la matériau pulvérulent injecté est issu du traitement des fumées issues de l'incinération d'ordures ménagères.

Pour un débit nominal de 350 kg/heure, le débit du gaz de transport en phase dense est de l'ordre de 12 Nm³/heure. L'unité Nm³/heure, ou normaux mètres cubes par heure, pour le gaz de transport du matériau pulvérulent en phase dense concerne le débit de gaz de transport mesuré dans les conditions normales de température et de pression.

La lance d'injection, dans le four, a un diamètre interne de 20 mm, ce diamètre a été choisi en fonction du débit d'injection du matériau pulvérulent dans le four.

Le bain de fusion, constitué par la partie minérale du matériau pulvérulent injecté, a un débit qui peut varier de 100 à 300 kg/heure, soit environ 70 à 75% du débit d'injection et s'écoule par débordement dans le laminoir qui le met en forme et le refroidit pour délivrer un ruban de verre ou de matériau cristallin de largeur de 150 à 200 mm, d'épaisseur de 4 à 8 mm, à une vitesse pouvant varier de 0,8 m à 4 m/min.

La torche à plasma 11 est dimensionnée de manière à pouvoir mettre en fusion le matériau pulvérulent. La gamme de puissance est variable et réglable de 175 à 700 kW électrique environ.

Dans cet exemple de réalisation, l'écoulement plasma, dirigé verticalement vers le bas, sort de la torche à une distance du bain qui est ajustée pour optimiser le transfert thermique avec le bain. Cette distance est ajustable de 450 mm à 950 mm environ et est ajustée de préférence à environ 700 mm.

Pour un débit sensiblement constant de produits à l'entrée de 350 kg/heure de matériau pulvérulent, la fusion nécessite une puissance torche qui s'établit entre 350 et 700 kwatts, en fonction d'une part de la composition chimique variable des produits à l'entrée et d'autre part de l'augmentation des pertes thermiques du four au cours du fonctionnement industriel continu. Dans ces conditions, l'énergie nécessaire à la fusion peut varier d'environ 1 kWh/kg à 1,75 kWh/kg.

La hauteur nominale du bain est de 300 mm dans la zone de fusion. Sa température est maintenue à environ 1300 à 1500°C dans la zone de fusion et à 1250 à 1300°C dans la zone de coulée.

La température des fumées issues de la fusion du matériau pulvérulent est de l'ordre de 1500°C et leur débit s'établit entre 300 et 400 m³/heure, pour 350 kg matériau pulvérulent injectés dans le four par heure. L'unité Nm³/heure se rapporte au débit en m³/heure des gaz et fumées issus de la mise en fusion du matériau pulvérulent, mesuré dans les conditions normales de température et de pression (273°K, 101325 Pa).

Le bain de fusion extrait du four par débordement et tirage est refroidi à la sortie du four. Il constitue alors un vitrifiat dont la composition se situe dans le domaine vitreux du diagramme de phase du système CaO-Al₂O₃-SiO₂, dans une zone où la température de fusion est relativement basse, correspondant aux valeurs mentionnées ci-dessus. Par ailleurs, la composition du vitrifiat permet de garantir un degré de résistance élevé à l'hydrolyse et en conséquence un comportement à long terme compatible avec un objectif de valorisation, par exemple en sous-couche routière. A titre d'exemple, les pourcentages respectifs moyens de CaO, Al₂O₃ et SiO₂ sont 37%, 16% et 34% en moyenne dans les matériaux pulvérulents issus de l'incinération des ordures ménagères traitées dans cet exemple.

Lorsque l'injection du matériau pulvérulent a été stoppée, le four a pu être maintenu en température au moyen de la torche à plasma. Ce maintien en température a été appelé "mode veille par torche" par les inventeurs.

La torche à plasma peut ainsi être utilisée comme source d'énergie permettant de maintenir le four en température dans les cas d'arrêt d'injection de matériau pulvérulent. La torche fournit alors seulement l'énergie nécessaire au maintien du four et du bain en température, en général comprise entre 175 et 250 kW. Ce mode opératoire évite les chocs thermiques sur les réfractaires, la torche ayant de plus l'avantage de conserver non seulement la valeur moyenne des températures mais également les gradients qui existent nécessairement du fait de l'injection de cendres à température ambiante.

### Exemple d'une variante du mode de réalisation de l'invention

Dans cette variante, le dispositif est celui décrit précédemment, à l'exception du moyen d'injection du matériau pulvérulent dans le four. En effet, dans cette variante, le moyen d'injection qui a été utilisé est un injecteur à vis. Cet injecteur à vis a été positionné dans le four de telle manière que le matériau pulvérulent est introduit sur le bain de fusion.

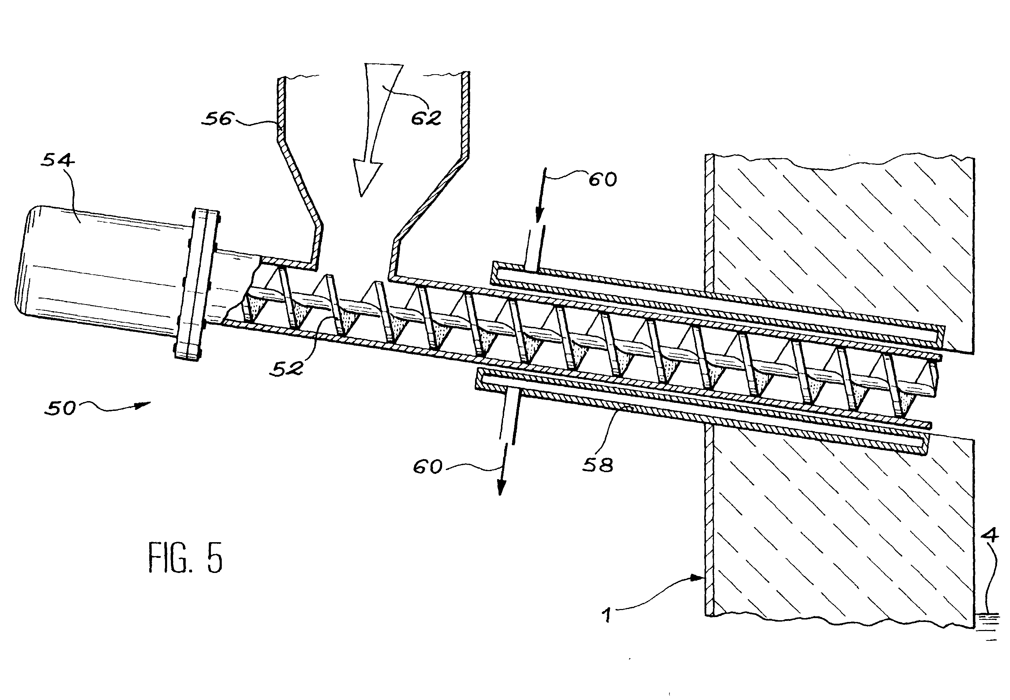

La figure 5 illustre schématiquement l'injecteur à vis utilisé dans cet exemple. Sur cette figure, l'injecteur est référencé 50. Il comprend une vis 52, un moteur 54 et une trémie 56 d'amenée du matériau pulvérulent sur la vis 52.

La vis 52 d'introduction du matériau pulvérulent dans le four 1 est de type vis d'Archimède pleine, inclinée de 5 à 20° par rapport à la surface du bain de fusion référencé 4. L'injecteur à vis 50 est entouré d'un fourreau métallique 58 refroidi par un circuit d'eau schématisé par les flèches 60. La longueur de la vis 52 est de 400 mm, son diamètre, y compris le fourreau refroidi est de l'ordre de 90 mm, et l'intersection de l'axe de la vis avec la paroi interne du four est située à environ 150 mm au-dessus du bain de fusion 4. L'extrémité de l'injecteur à vis 50 traverse la paroi du four 1.

L'introduction du matériau pulvérulent dans la zone de fusion a été réglée en mettant en série deux vis, la première extérieure au four, non représentée sur la figure 5, permettant de faire varier le débit de matériau pulvérulent, schématisé par la flèche référencée 62, par variation de vitesse de la vis, et la seconde vis, référencée 52, couplée au four et fonctionnant à vitesse constante, permettant d'introduire le matériau pulvérulent dans le four.

La vis d'introduction du matériau pulvérulent dans le four a été inclinée de 5 à 30° par rapport à la surface du bain de fusion, de préférence de 5 à 10°. Cette vis a permis au matériau pulvérulent d'être introduit au-dessus du bain à une distance du bain de fusion allant d'environ 5 à 50 cm. De bons résultats ont été obtenus à une distance de 10 à 20 centimètres. Ce moyen d'injection a permis de conduire, au choix, à une injection continue ou discontinue du matériau pulvérulent dans le four par réglage de la vitesse de rotation de la vis. Ce type d'injection a aussi permis de limiter l'envol du matériau pulvérulent par exemple vers des dispositifs de traitement de gaz et fumées et a permis également d'optimiser le bilan thermique de fusion du matériau.

L'introduction du matériau pulvérulent a pu être réglée à un débit allant jusqu'à 1200 kg environ de matériau par heure. Ce réglage a été variable et était fonction notamment du volume de bain de fusion dans la zone de fusion du four et dans la zone de coulée, de la puissance de la torche, et de l'écoulement et du tirage du bain de fusion hors du four.

L'introduction ou injection par vis est caractérisée par les faits suivants :
d'une part, par le fait que l'effet d'introduction des matériaux pulvérulents par poussée mécanique se manifeste en aval du dispositif en raison de la continuité du milieu solide constitué par le matériau pulvérulent,
d'autre part, par le fait que l'absence ou la minimisation de la quantité de gaz pour le fonctionnement du dispositif permet de limiter les envols résiduels avant traitement.

Dans les conditions précédemment décrites, une injection de 300 à 700 kg de matériau pulvérulent par heure a donné de très bons résultats pour le vitrifiat formé.

## Revendications

1. Procédé de vitrification en continu d'un matériau pulvérulent, dans lequel le matériau pulvérulent est introduit dans une zone de fusion (3) d'un four (1), par un moyen d'injection (7), pour y être mis en fusion au moyen d'au moins une torche à plasma (11) de façon à obtenir un bain de fusion (4), et dans lequel le bain de fusion est extrait du four dans une zone de coulée (5), le matériau étant introduit latéralement dans la zone de fusion selon une direction comprenant une composante horizontale, et le bain de fusion étant extrait du four par débordement dans ladite zone de coulée, sensiblement selon ladite composante horizontale et à l'opposé du moyen d'injection du matériau dans le four par rapport à la zone de fusion.

2. Procédé selon la revendication 1, dans lequel le bain de fusion (4) est extrait du four (1) par débordement et tirage dans la zone de coulée (5).

3. Procédé selon la revendication 2, dans lequel la torche à plasma (11) est une torche à plasma d'arc non transféré.

4. Procédé selon l'une quelconque des revendications 1 à 3, dans lequel la direction d'injection du matériau dans le four (1) comprend en outre une composante verticale orientée vers le bas.

5. Procédé selon l'une quelconque des revendications 1, 3 ou 4, dans lequel l'injection du matériau dans le four (1) et le débordement du bain de fusion (4) sont régulés pour maintenir dans la zone de coulée (5) un niveau de bain de fusion sensiblement constant.

6. Procédé selon l'une quelconque des revendications 2 à 4, dans lequel l'injection du matériau dans le four (1) et le tirage du bain de fusion (4) sont régulés pour maintenir dans la zone de coulée (5) un niveau de bain de fusion sensiblement constant.

7. Procédé selon l'une quelconque des revendications 1 à 6, dans lequel l'injection du matériau dans le four (1) et la puissance de la torche (11) sont régulées pour maintenir sensiblement constantes les températures du bain de fusion (4) et de la zone de coulée (5).

8. Procédé selon l'une quelconque des revendications 1 à 7 dans lequel la hauteur de la torche à plasma (11) est régulée pour maintenir sensiblement constante la température de la zone de fusion (3).

9. Procédé selon l'une quelconque des revendications 2 à 4, dans lequel l'injection du matériau dans le four (1), la torche à plasma (11), le débordement et le tirage du bain de fusion (4) sont régulés.

10. Procédé selon l'une quelconque des revendications 1 à 9, dans lequel l'injection du matériau est effectuée dans le bain de fusion (4).

11. Procédé selon l'une quelconque des revendications 1 à 9, dans lequel l'injection du matériau est effectuée sur le bain de fusion (4).

12. Procédé selon la revendication 10 ou 11, dans lequel la composante horizontale et la composante verticale de la direction d'injection du matériau pulvérulent sont réglables.

13. Procédé selon l'une quelconque des revendications précédentes dans lequel l'injection du matériau est réalisée en phase dense au moyen d'un gaz porteur.

14. Procédé selon l'une quelconque des revendications précédentes, dans lequel la zone de fusion (3) est de forme sensiblement cylindrique.

15. Procédé selon l'une quelconque des revendications précédentes, dans lequel le bain de fusion (4) est maintenu à une température de 1300 à 1500°C.

16. Procédé selon l'une quelconque des revendications précédentes, dans lequel la zone de fusion (3) en contact avec le bain de fusion (4) est refroidie pour un fonctionnement en auto-creuset.

17. Procédé selon l'une quelconque des revendications précédentes, dans lequel la torche à Plasma (11) est dirigée vers le bas pour un écoulement sensiblement central du plasma sur le bain de fusion (4), par rapport à la zone de fusion (3).

18. Procédé selon l'une quelconque des revendications précédentes, dans lequel le tirage du bain de fusion (4) est effectué dans un dispositif à rouleau refroidi (37) qui tire le bain de fusion en un matériau vitrifié (47).

19. Procédé selon l'une quelconque des revendications précédentes, dans lequel le matériau vitrifié (47) tiré est laminé.

20. Procédé selon l'une quelconque des revendications précédentes, dans lequel la mise en fusion du matériau pulvérulent entraînant la formation de fumées et de gaz, lesdits fumées et gaz sont extraits à une température supérieure ou égale à 1200°C.

21. Procédé selon la revendication 20, dans lequel la mise en fusion du matériau pulvérulent entraînant la formation de fumées et de gaz, lesdits fumées et gaz extraits du four (1) sont repris et trempés.

22. Procédé selon l'une quelconque des revendications précédentes, dans lequel on injecte dans le four (1) en même temps que le matériau pulvérulent, un ou plusieurs additifs choisis parmi des additifs de fluidité, de glissement, d'homogénéité du bain de fusion (4), de formation de matrice de verre ou un mélange de ces additifs.

23. Dispositif de vitrification en continu d'un matériau pulvérulent, comprenant un four (1) incluant une zone de fusion (3) du matériau pulvérulent et une zone de coulée (5) du matériau en fusion, au moins un moyen d'injection (7) du matériau pulvérulent, au moins une torche à plasma (11), et au moins un moyen de débordement (17) du bain de fusion (4),
- le moyen d'injection du matériau pulvérulent étant latéral à la zone de fusion du four et dirigé selon une direction d'injection comprenant une composante horizontale,
- la zone de coulée étant orientée sensiblement selon ladite composante horizontale et sensiblement à l'opposé dudit moyen d'injection, par rapport à la zone de fusion, ladite zone de coulée étant une zone de débordement de ladite zone de fusion et comprenant une première et une deuxième extrémités, la première extrémité de la zone de coulée étant en contact avec la zone de fusion, la dauxiéme extrémité de la zone de coulée étant en contact avec le moyen de débordement du bain de fusion, ledit moyen de débordement étant positionné pour un débordement du bain de fusion selon une direction sensiblement horizontale.

24. Dispositif selon la revendication 23, dans lequel le dispositif comprend un moyen de tirage (37) du bain de fusion (4) couplé au moyen de débordement (17).

25. Dispositif selon la revendication 24, dans lequel la torche à plasma (11) est une torche à plasma d'arc non transféré.

26. Dispositif selon l'une quelconque des revendications 23 à 25, dans lequel le moyen d'injection (7) du matériau pulvérulent est en outre orienté selon une direction comprenant une composante verticale orientée vers le bas.

27. Dispositif selon l'une quelconque des revendications 24 à 26, dans lequel le moyen d'injection (7) du matériau pulvérulent dans le four (1) et le moyen de tirage (37) du bain de fusion (4) sont régulés par une boucle de régulation du niveau de bain de fusion dans le four.

28. Dispositif selon l'une quelconque des revendications 23, 25 ou 26, dans lequel le moyen d'injection (7) du matériau pulvérulent dans le four (1) et le moyen de débordement (17) du bain de fusion (4) sont régulés par une boucle de régulation du niveau de bain de fusion dans le four.

29. Dispositif selon l'une quelconque des revendications 23 à 28, dans lequel le moyen d'injection (7) du matériau pulvérulent dans le four (1) et la puissance de la torche (11) sont régulés par une boucle de régulation des températures du bain de fusion (4) et de la zone de coulée (5).

30. Dispositif selon l'une quelconque des revendications 23 à 29, dans lequel la hauteur de la torche (11) dans le four (1) est régulée par une boucle de régulation de la température de la zone de fusion (3).

31. Dispositif selon l'une quelconque des revendications 24 à 26, dans lequel le moyen d'injection (7) du matériau pulvérulent, la torche à plasma (11), le moyen de débordement (17) du bain de fusion (4) et le moyen de tirage (37) du bain de fusion sont régulés par au moins une boucle de régulation.

32. Dispositif selon l'une quelconque des revendications précédentes, dans lequel le moyen d'injection (7) est un dispositif d'injection pneumatique en phase dense.

33. Dispositif selon l'une quelconque des revendications précédentes, dans lequel le moyen d'injection (7) est un injecteur à vis.

34. Dispositif selon l'une quelconque des revendications précédentes, dans lequel la torche à plasma (11) est protégée par un fourreau (13) en matériau réfractaire.

35. Dispositif selon l'une quelconque des revendications précédentes, dans lequel le moyen de tirage (37) est un dispositif de laminage a rouleaux refroidis (39).

36. Dispositif selon l'une quelconque des revendications précédentes, dans lequel le four (1) comprend en outre un carneau (25) d'extraction de gaz et fumées.

37. Dispositif selon l'une quelconque des revendications précédentes, dans lequel le matériau pulvérulent est traité en ligne avec une installation d'incinération d'ordures ménagères préexistante, et dans lequel les gaz et fumées issus de la fusion du matériau pulvérulent sont traités en ligne avec un dispositif de traitement des gaz et fumées de ladite installation d'incinération des ordures ménagères.

## Claims

1. Continuous process for vitrifying a pulverulent material, wherein the pulverulent material is introduced into a fusion zone (3) of a furnace (1) by injection means (7), where it is melted by means of a plasma torch (11) so as to obtain a melt (4), and wherein the melt is removed from the furnace via a casting zone (5), the material being introduced laterally into the fusion zone in a direction comprising a horizontal component, and the melt being removed from the furnace by overflowing via the said casting zone, more or less along said horizontal component and away from the means for injecting the material into the furnace, in relation to the fusion zone.

2. Process of claim 1, wherein said melt (4) is extracted from the furnace (1) by overflowing and drawing via the said casting zone (5).

3. Process of claim 2, wherein said plasma torch (11) is a non-transferring arc plasma torch.

4. Process of any of claims 1 to 3, wherein the injection direction of the material into the furnace (1) also comprises a vertical component oriented downwards.

5. Process of any of claims 1, 3 or 4, wherein the injection of the material into the furnace (1) and overflow of the melt (4) are controlled to maintain a more or less constant melt level in the casting zone (5).

6. Process of any of claims 2 to 4, wherein the injection of the material into the furnace (1) and drawing of the melt (4) are controlled to maintain a more or less constant melt level in the casting zone (5).

7. Process of any of claims 1 to 6, wherein the injection of the material into the furnace (1) and the power rating of the torch (11) are controlled to maintain more or less constant temperatures of the melt (4) and the fusion zone (5).

8. Process of any of claims 1 to 7, wherein the height of the plasma torch (11) is controlled to maintain a constant temperature of fusion zone (3).

9. Process of any of claims 2 to 4, wherein the injection of the material into the furnace (1), the plasma torch (11), the overflow and drawing of the melt (4) are controlled.

10. Process of any of claims 1 to 9, wherein the material is injected into the melt (4).

11. Process of any of claims 1 to 9, wherein the material is injected onto the melt (4).

12. Process of claims 10 or 11, wherein the horizontal and vertical components of the direction in which the pulverulent material is injected can be controlled.

13. Process of any of the foregoing claims, wherein the material is injected in dense mode using a conveying gas.

14. Process of any of the foregoing claims, wherein the fusion zone (3) is more or less cylindrical in shape.

15. Process of any of the foregoing claims, wherein the melt (4) is maintained at a temperature of 1300 to 1500°C.

16. Process of any of the foregoing claims, wherein the fusion zone (3) in contact with the melt (4) is cooled for auto-crucible operation.

17. Process of any of the foregoing claims, wherein the plasma torch (11) is directed downwards so that the plasma flows more or less onto the centre of the melt (4) in relation to the fusion zone (3).

18. Process of any of the foregoing claims, wherein the drawing of the melt (4) is effected by an apparatus (37) filled with cooled rollers that draw the melt into a vitrified material (47).

19. Process of any of the foregoing claims, wherein the drawn vitrified material (47) is rolled.

20. Process of any of the foregoing claims, wherein melting of the pulverulent material produces fumes and gases that are extracted at a temperature greater than or equal to 1200°C.

21. Process of claim 20, wherein melting of the pulverulent material produces fumes and gases that are extracted from the furnace (1) to be collected and quenched.

22. Process of any of the foregoing claims, wherein one or more additives designed to increase fluidity and slip of the melt (4) in the furnace (1), to give better melt uniformity, or to facilitate the formation of the vitreous matrix, or a mixture of these additives, is injected at the same time as the pulverulent material.

23. Continuous vitrification apparatus for a pulverulent material comprising a furnace (1) that includes a fusion zone (3) for pulverulent material and a casting zone (5) for the melted material, at least one means (7) for injecting pulverulent material, at least one plasma torch (11) and at least one means (17) for causing the melt (4) to overflow,
- said means for injecting pulverulent material being lateral to the fusion zone of the furnace and directed in one of the injection directions comprising a horizontal component,
- said casting zone being oriented more or less along said horizontal component and more or less away from the said injection means, in relation to the fusion zone, said casting zone being an overflow zone of the said fusion zone and comprising a first and a second end, the first end of the said casting zone being in contact with the fusion zone, the second end of the casting zone being in contact with the melt overflow means, said overflow means being positioned to give overflow of the melt in a more or less horizontal direction.

24. Apparatus of claim 23, wherein the apparatus comprises means (37) for drawing the melt (4) coupled to overflow means (17).

25. Apparatus of claim 24, wherein the plasma torch (11) is a non-transferring arc plasma torch.

26. Apparatus of any of claims 23 to 25, wherein the means (7) for injecting the pulverulent material is also oriented in a direction comprising a vertical component directed downwards.

27. Apparatus of any of claims 24 to 26, wherein the means (7) for injecting the pulverulent material into the furnace (1) and the means (37) for drawing the melt (4) are controlled by a control loop that sets the level of the melt in the furnace.

28. Apparatus of any of claims 23, 25 or 26, wherein the means (7) for injecting the pulverulent material into the furnace (1) and the melt overflow means (17) are controlled by a control loop that sets the level of the melt in the furnace.

29. Apparatus of any of claims 23 to 28, wherein the means (7) for injecting the pulverulent material into the furnace (1) and the power rating of the torch (11) are controlled by a control loop that sets the temperatures of the melt (4) and the casting zone (5).

30. Apparatus of any of claims 23 to 29, wherein the height of the torch (11) in the furnace (1) is controlled by a control loop that sets the temperature of the fusion zone (3).

31. Apparatus of any of claims 24 to 26, wherein the means (7) for injecting the pulverulent material, the plasma torch (11), the melt (4), overflow means (17) and the melt drawing means (37) are controlled by at least one control loop.

32. Apparatus of any of the foregoing claims, wherein the injection means (7) is a pneumatic injection apparatus operating in dense mode.

33. Apparatus of any of the foregoing claims, wherein the injection means (7) is a screw-type injector.

34. Apparatus of any of the foregoing claims, wherein the plasma torch (11) is protected by a sheath (13) made of a refractory material.

35. Apparatus of any of the foregoing claims, wherein the drawing means (37) is a laminating apparatus (39) with cooled rollers.

36. Apparatus of any of the foregoing claims, wherein the furnace (1) also comprises a flue (25) for extracting fumes and gases.

37. Apparatus of any of the foregoing claims, wherein the pulverulent material is treated on line with an existing household waste incineration plant, and in which the gases and fumes produced during melting of the pulverulent material are treated on line with an apparatus for treating the gases and fumes of the said household waste incineration plant.

## Patentansprüche

1. Verfahren zum kontinuierlichen Vitrifizieren eines Pulvermaterials, bei dem das Pulvermaterial durch eine Einspritz- bzw. Einblaseinrichtung (7) in eine Schmelzzone (3) eines Ofens (1) eingeleitet wird, um dort mittels mindestens eines Plasmabrenners (11) geschmolzen zu werden, so daß man ein Schmelzebad (4) erhält, und bei dem das Schmelzebad in einer Abstic- bzw. Gießzone (5) aus dem Ofen ausgetragen wird, wobei das Material seitlich in einer eine horizontale Komponente enthaltenden Richtung in die Schmelzzone eingeleitet wird und das Schmelzebad durch Überlaufen in der Gießzone im wesentlichen gemäß der horizontalen Komponente und hinsichtlich der Schmelzzone entgegengesetzt zur Material-Einblaseinrichtung im Ofen aus dem Ofen ausgetragen wird.

2. Verfahren nach Anspruch 1, bei dem das Schmelzebad (4) aus dem Ofen (1) durch Überlaufen und Abziehen in der Gießzone (5) aus dem Ofen (1) ausgetragen wird.

3. Verfahren nach Anspruch 2, bei dem der Plasmabrenner (11) ein Plasmabrenner mit nicht weitergetragenem Lichtbogen (d'arc non-transféré) ist.

4. Verfahren nach einem der Ansprüche 1 bis 3, bei dem die Material-Einblasrichtung in den Ofen (1) außerdem eine nach unten gerichtete vertikale Komponente umfaßt.

5. Verfahren nach einem der Ansprüche 1, 3 oder 4, bei dem das Einblasen des Materials in den Ofen (1) und das Überlaufen des Schmelzebads (4) so gesteuert werden, daß in der Gießzone (5) ein im wesentlichen konstanter Pegel des Schmelzebads aufrechterhalten wird.

6. Verfahren nach einem der Ansprüche 2 bis 4, bei dem das Einblasen des Materials in den Ofen (1) und das Abziehen des Schmelzebads (4) so gesteuert werden, daß in der Gießzone (5) ein im wesentlichen konstanter Pegel des Schmelzebads aufrechterhalten wird.

7. Verfahren nach einem der Ansprüche 1 bis 6, bei dem das Einblasen des Materials in den Ofen (1) und die Leistung des Brenners (11) so gesteuert werden, daß die Temperaturen des Schmelzebads (4) und der Gießzone (5) im wesentlichen konstant gehalten werden.

8. Verfahren nach einem der Ansprüche 1 bis 7, bei dem die Höhe des Plasmabrenners (11) so gesteuert wird, daß die Temperatur der Schmelzzone (3) im wesentlichen konstant gehalten wird.

9. Verfahren nach einem der Ansprüche 2 bis 4, bei dem das Einblasen des Materiäls in den Ofen (1), der Plasmabrenner (11), das Überlaufen und das Abziehen des Schmelzebads (4) gesteuert werden.

10. Verfahren nach einem der Ansprüche 1 bis 9, bei dem das Einblasen des Materials in dem Schmelzebad (4) erfolgt.

11. Verfahren nach einem der Ansprüche 1 bis 9, bei dem das Einblasen des Materials auf das Schmelzebad (4) erfolgt.

12. Verfahren nach Anspruch 10 oder 11, bei dem die horizontale Komponente und die vertikale Komponente der Einblasrichtung des Pulvermaterials regelbar sind.

13. Verfahren nach einem der vorangehenden Ansprüche, bei dem das Einblasen des Materials in einer dichten Phase mittels eines Trägergases vorgenommen wird.

14. Verfahren nach einem der vorangehenden Ansprüche, bei dem die Schmelzzone (3) im wesentlichen eine zylindrische Form hat.

15. Verfahren nach einem der vorangehenden Ansprüche, bei dem das Schmelzebad (4) auf einer Temperatur von 1300 bis 1500°C gehalten wird.

16. Verfahren nach einem der vorangehenden Ansprüche, bei dem die Schmelzzone (3) in Kontakt mit dem Schmelzebad (4) für eine Funktionsweise als selbsttätiger Schmelztiegel (en auto-creuset) gekühlt wird.

17. Verfahren nach einem der vorangehenden Ansprüche, bei dem der Plasmabrenner (11) für ein hinsichtlich der Schmelzzone (3) im wesentlichen zentrales Strömen des Plasmas auf das Schmelzebad (4) nach unten gerichtet wird.

18. Verfahren nach einem der vorangehenden Ansprüche, bei dem das Abziehen des Schmelzebads (4) in einer Kühlwalzenvorrichtung (37) vorgenommen wird, welche das Schmelzebad zu einem vitrifizierten Material (47) zieht.

19. Verfahren nach einem der vorangehenden Ansprüche, bei dem das gezogene, vitrifizierte Material (47) gewalzt wird.

20. Verfahren nach einem der vorangehenden Ansprüche, bei dem das Schmelzen des Pulvermaterials die Bildung von Rauch und Gas zur Folge hat und der Rauch und das Gas mit einer Temperatur von größer gleich 1200°C abgeführt werden.

21. Verfahren nach Anspruch 20, bei dem das Schmelzen des Pulvermaterials die Bildung von Rauch und Gas zur Folge hat und der Rauch und das Gas, die aus dem Ofen (1) abgeführt wurden, aufgefangen und abgeschreckt werden.

22. Verfahren nach einem der vorangehenden Ansprüche, bei dem gleichzeitig mit dem Pulvermaterial ein oder mehrere Zusatzstoffe) in den Ofen (1) eingeblasen werden, die aus Fluiditäts-Zusatzstoffen, Gleit-Zusatzstoffen, die Homogenität des Schmelzebades (4) fördernden Zusatzstoffen, eine Glas-Matrix bildenden Zusatzstoffen oder einem Gemisch dieser Zusatzstoffe ausgewählt werden.

23. Vorrichtung zum kontinuierlichen Vitrifizieren eines Pulvermaterials mit einem Ofen (1), der eine Schmelzzone (3) des Pulvermaterials und eine Gießzone (5) des Schmelzmaterials, mindestens eine Einblaseinrichtung (7) für das Pulvermaterial, mindestens einen Plasmabrenner (11) und mindestens eine Überlaufeinrichtung (17) des Schmelzebades (4) aufweist, wobei
- sich die Einblaseinrichtung für das Pulvermaterial seitlich der Schmelzzone des Ofens befindet und entsprechend einer Einblasrichtung , die eine horizontale Komponente aufweist, ausgerichtet ist,
- die Gießzone im wesentlichen nach der horizontalen Komponente und bezüglich der Schmelzzone im wesentlichen entgegengesetzt zur Einblaseinrichtung ausgerichtet ist, wobei die Gießzone eine Überlaufzone der Schmelzzone ist und ein erstes und zweites Ende umfaßt, wobei das erste Ende der Gießzone mit der Schmelzzone in Kontakt steht, das zweite Ende der Gießzone mit der Überlaufeinrichtung des Schmelzebades in Kontakt steht und die Überlaufeinrichtung für ein Überlaufen des Schmelzebades in einer im wesentlichen horizontalen Richtung positioniert ist.

24. Vorrichtung nach Anspruch 23, bei der die Vorrichtung eine mit der Überlaufeinrichtung (17) gekoppelte Abzieheinrichtung (37) des Schmelzebades (4) umfaßt.

25. Vorrichtung nach Anspruch 24, bei der der Plasmabrenner (11) ein Plasmabrenner mit nicht weitergetragenem Lichtbogen ist.

26. Vorrichtung nach einem der Ansprüche 23 bis 25, bei der die Einblaseinrichtung (7) für das Pulvermaterial außerdem entsprechend einer Richtung ausgerichtet ist, die eine nach unten gerichtete vertikale Komponente aufweist.

27. Vorrichtung nach einem der Ansprüche 24 bis 26, bei der die Einblaseinrichtung (7) des Pulvermaterials im Ofen (1) und die Abzieheinrichtung (37) für das Schmelzebad (4) durch einen Regelkreis hinsichtlich des Pegels des Schmelzebades im Ofen gesteuert werden.

28. Vorrichtung nach einem der Ansprüche 23, 25 oder 26, bei der die Einblaseinrichtung (7) des Pulvermaterials im Ofen (1) und die Überlaufeinrichtung (17) des Schmelzebades (4) durch einen Regelkreis hinsichtlich des Pegels des Schmelzebades im Ofen gesteuert werden.

29. Vorrichtung nach einem der Ansprüche 23 bis 28, bei der die Einblaseinrichtung (7) des Pulvermaterials im Ofen (1) und die Leistung des Brenners (11) durch einen Regelkreis hinsichtlich der Temperaturen des Schmelzebades (4) und der Gießzone (5) gesteuert werden.

30. Vorrichtung nach einem der Ansprüche 23 bis 29, bei der die Höhe des Brenners (11) im Ofen (1) durch einen Regelkreis hinsichtlich der Temperatur der Schmelzzone (3) gesteuert wird.

31. Vorrichtung nach einem der Ansprüche 24 bis 26, bei der die Einblaseinrichtung (7) für das Pulvermaterial, der Plasmabrenner (11), die Überlaufeinrichtung (17) des Schmelzebades (4) und die Abzieheinrichtung (37) des Schmelzebades durch mindestens einen Regelkreis gesteuert werden.

32. Vorrichtung nach einem der vorangehenden Ansprüche, bei der die Einblaseinrichtung (7) eine pneumatische Einblasvorrichtung für eine dichte Phase ist.

33. Vorrichtung nach einem der vorangehenden Ansprüche, bei der die Einblaseinrichtung (7) ein Schnecken-Injektor ist.

34. Vorrichtung nach einem der vorangehenden Ansprüche, bei der der Plasmabrenner (11) von einer Hülse (13) aus feuerfestem Material (13) geschützt ist.

35. Vorrichtung nach einem der vorangehenden Ansprüche, bei der die Abziehvorrichtung (37) eine Walzvorrichtung mit Kühlwalzen (39) ist.

36. Vorrichtung nach einem der vorangehenden Ansprüche, bei der der Ofen (1) außerdem einen Rauch- und Gasabzug (25) umfaßt.

37. Vorrichtung nach einem der vorangehenden Ansprüche, bei der das Pulvermaterial in-line mit einer schon bestehenden Hausmüll-Verbrennungsanlage behandelt wird, und bei der die Gase und der Rauch, die sich aus dem Schmelzen des Pulvermaterials ergeben, in-line mit einer Gas- und Rauchbehandlungs-vorrichtung der Hausmüll-Verbrennungsanlage behandelt werden.
